(19) Europäisches Patentamt
European Patent Office
Office européen des brevets

(11) **EP 2 400 357 A1**

(12) **EUROPEAN PATENT APPLICATION**
published in accordance with Art. 153(4) EPC

(43) Date of publication:
**28.12.2011 Bulletin 2011/52**

(51) Int Cl.:
*G05B 11/36* (2006.01)   *G05D 19/02* (2006.01)

(21) Application number: **09840378.5**

(86) International application number:
**PCT/JP2009/053306**

(22) Date of filing: **18.02.2009**

(87) International publication number:
**WO 2010/095272 (26.08.2010 Gazette 2010/34)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Toyota Jidosha Kabushiki Kaisha Toyota-shi, Aichi 471-8571 (JP)**

(72) Inventors:
• **WATANABE, Takahito**
  **Toyota-shi**
  **Aichi 471-8571 (JP)**

• **HONMA, Motohiko**
  **Toyota-shi**
  **Aichi 471-8571 (JP)**
• **TABATA, Masaaki**
  **Toyota-shi**
  **Aichi 471-8571 (JP)**

(74) Representative: **Winter, Brandl, Fürniss, Hübner, Röss, Kaiser, Polte - Partnerschaft Alois-Steinecker-Strasse 22 85354 Freising (DE)**

(54) **STATE FEEDBACK CONTROL DEVICE, STATE FEEDBACK CONTROLLER AND STATE FEEDBACK CONTROL METHOD**

(57)    A corrected state space model obtained by correcting a state space model to represent a controllable system by adding an error matrix Δ to a state space model representing an uncontrollable system is designed. A control object is controlled based on a control input of the system represented by this corrected state space model. The control input is calculated by a state feedback controller. By correcting the state space model representing the uncontrollable system by the error matrix Δ, the system can be made controllable. Since the error matrix Δ is added to a state matrix, an influence of an error on an output of the system can be reduced.

FIG.2

corrected state space model

EP 2 400 357 A1

**Description**

BACKGROUND OF THE INVENTION

1. Technical Field

The present invention relates to a state feedback control apparatus, a state feedback controller, and a state feedback control method for state-feedback controlling a control object. The present invention is applied to a damping force control apparatus for suppressing and controlling a vibration of a suspension apparatus of a vehicle by controlling a damping force for example.

2. Related Art

A state feedback control apparatus for state-feedback controlling a control object is practically utilized. For example, state feedback control is often used for damping force control of a suspension apparatus of a vehicle.

Nonlinear H-infinity state feedback control is sometimes used for the damping force control of the suspension apparatus of the vehicle. For example, Japanese Patent Application Publication No. 2000-148208 discloses a damping force control apparatus for obtaining a variable damping coefficient representing a variable amount of a damping force based on a control input calculated by a state feedback controller designed by applying a nonlinear H-infinity control theory to a system represented by a state space model of a vibration system including a variable damping type suspension apparatus (the control object).

SUMMARY OF THE INVENTION

In the case where a control object is state-feedback controlled, a system is required to be controllable as a premise thereof. That is, a controllable matrix of a state space model (a state space representation) representing the system is required to have full rank. However, there may be the case where the system cannot be designed to be controllable. Particularly, in the case where the number of a motion equation serving as a basis in designing of the state space model of the control object is less than the number of a control input calculated by a state feedback controller, the system represented by the state space model becomes uncontrollable.

For example, considering a situation that a two wheel model of a vehicle is a control object, and a state space model of the control object is designed on a basis of a motion equation in the vertical (up and down) direction of an sprung member (above-spring member) obtained from the control object. In this case, the number of the motion equation serving as a basis in designing the model is one (only the vertical motion equation of the sprung member). Meanwhile, the number of the control input calculated by the state feedback controller is two (variable damping coefficients of dampers used in left and right suspension apparatuses). Since the number of the motion equation is less than the number of the control input, the system represented by the designed state space model becomes uncontrollable.

Further, considering another situation that a four wheel model of the vehicle is the control object, and a state space model of the control object is designed on a basis of motion equations relating to heave motion (vertical motion), pitch motion, and roll motion of the sprung member obtained from the control object. In this case, the number of the motion equation serving as a basis in designing the model is three (a heave motion equation, a pitch motion equation, and a roll motion equation). Meanwhile, the number of the control input is four (variable damping coefficients of dampers used in suspension apparatuses respectively attached to front left and right portions of the sprung member and rear left and right portions of the sprung member). In this case as well, since the number of the motion equation is less than the number of the control input, the system becomes uncontrollable.

When the system is uncontrollable, a state quantity cannot be controlled by the control input. Thus, the control object cannot be state-feedback controlled. In this case, conventionally, the state space model is reviewed and the model is redesigned such that the system becomes controllable. However, in the case where the model is redesigned, new parameters are required to be identified, and the redesigned model becomes complicated. Therefore, there is a problem that a lot of time is required for redesigning the model. Another method of obtaining controllability is that a pseudo error is set into the model. According to this method, the model can be designed within a relatively short time since it is only necessary to add the error into the model. However, the error is conventionally added into the input and output sides of the model (such as an input matrix or an output matrix). Thus, there is a problem that the error greatly influences an output. Further, according to the conventional method, the error is added into a plurality of points of the model. Since the error is added into a plurality of points of the model, a magnitude of error elements are larger due to buildup of the error, and deviation between the designed model and the model of the control object is increased. Therefore, highly precise state-feedback control of the control object cannot be performed.

The present invention has been accomplished in order to solve the above problems, and its object is to provide a state feedback control apparatus and a state feedback control method capable of highly precisely state-feedback controlling a control object by a simple model correction even when a system represented by a state space model is uncontrollable, and a state feedback controller used in such state feedback control apparatus and method.

An aspect of the present invention is a state feedback control apparatus for state-feedback controlling a control object, including a state feedback controller for calculating a control input of a system based on a state quantity of the system represented by a corrected state space model, the corrected state space model being formed so as to represent a controllable system by adding an error matrix Δ to a state matrix of a state space model of the control object representing an uncontrollable system, and control means for controlling the control object based on the control input calculated by the state feedback controller.

According to the above invention, the control object is controlled based on the control input calculated by the state feedback controller in the system represented by the corrected state space model. The corrected state space model is designed so as to represent the controllable system by adding the error matrix Δ to the state matrix of the state space model of the control object which represents the uncontrollable system. In this corrected state space model, the state matrix to be multiplied by the state quantity is finely corrected by an addition of the error matrix Δ. By this fine correction, rank deficiency of the controllable matrix of the corrected state space model is prevented. Thereby, the system represented by the corrected state space model becomes controllable.

According to the present invention, even in the case where the state space model of the control object is designed as the model representing the uncontrollable system, the control object can be state-feedback controlled based on the control input calculated by the state feedback controller in the system represented by the corrected state space model corrected such that the system becomes controllable by an introduction of the error matrix Δ. Further, a basic structure of the corrected state space model is the same as the state space model of the control object except that the error matrix Δ is only added into the state space model. Therefore, there is no need for time required for redesigning the model. Further, since the error matrix Δ is added to the state matrix which is less influential on the output of the model, the error matrix Δ does not greatly influence the output. In addition, since only one error matrix Δ is added into the state space model, the buildup of the error is not generated. Therefore, the deviation between the corrected state space model and the state space model of the actual control object is decreased, and thereby highly precise state-feedback control of the control object can be performed. Since an error examination point is one point, time required for examining the error can be shortened. Since the present invention has many advantages described above, even in the case where the state space model is uncontrollable, highly precise state-feedback control of the control object can be performed by the simple model correction.

In the present invention, as long as the system represented by the corrected state space model becomes controllable, the error matrix Δ may be a matrix having a positive error element or a negative error element. The error matrix Δ may be designed such that an element or elements influencing a calculation of a rank of the controllable matrix of the corrected state space model is/are changed. In this case, the error matrix Δ may be designed such that elements in a row of the controllable matrix are not the same with the elements in another row of the controllable matrix. According to the configuration described above, the rank deficiency due to the fact that the elements in the row of the controllable matrix are the same with the elements in another row of the controllable matrix is prevented.

The present invention can be applied to the case where the number of the motion equation of the control object is less than the number of the control input calculated by the state feedback controller. For example, the present invention can be applied to the case where the damping force of the right suspension apparatus of the vehicle and the damping force of the left suspension apparatus of the vehicle are controlled at the same time based on one motion equation when vibrations of the suspension apparatuses are controlled by controlling damping forces of the suspension apparatuses by state feedback. The present invention can also be applied to the case where the damping forces of the four suspension apparatuses attached to the front left and right portions of the sprung member and the rear left and right portions of the sprung member are controlled at the same time based on the heave motion equation, the pitch motion equation, and the roll motion equation.

In the present invention, the state feedback controller may calculate the control input by applying H-infinity state feedback control to a generalized plant designed based on the system represented by the corrected state space model. In this case, the H-infinity state feedback control may be linear H-infinity state feedback control or nonlinear H-infinty state feedback control. According the configuration described above, the control object is state-feedback controlled based on the control input calculated by the state feedback controller (H-infinity state feedback controller) designed such that H-infinity norm $\|G\|_\infty$ of the generalized plant (L$_2$ gain from a disturbance w to an output z of the system in a case of the nonlinear H-infinity state feedback control) becomes less than a predetermined positive constant γ. Thus, disturbance suppression and robust stabilization are improved.

Elements in the error matrix Δ may include zero element. However, all the elements must not be the zero elements. In the case where a value of a non-zero element, which is an element other than the zero element (that is, an error element) is large, an influence of the error on the system is larger than that in the case where the value is small. Therefore, the value of the non-zero element in the error matrix Δ may be as a small value as possible. However, when the value of the non-zero element in the error matrix $\Delta$ is very small, the error matrix $\Delta$ is regarded as a zero matrix, and the system represented by the corrected state space model becomes substantially uncontrollable. Therefore, it is preferable that the value of the non-zero element in the error matrix $\Delta$ is appropriately small. In this case, a magnitude of the non-zero element in the error matrix $\Delta$ may be 1/10 to 1/100 of a magnitude of a non-zero element in the state matrix. According to this configuration, the system can obtain sufficient controllability and a influence rate of the error on the system is sufficiently reduced. In addition, the non-zero element in the error matrix $\Delta$ and the non-zero element in the state matrix are different from each other in terms of the number of digits. Thus, when the error matrix $\Delta$ is added to the state matrix, an addition element is prevented from being zero due to a setoff. The addition element is used for a calculation of the elements of the controllable matrix of the corrected state space model. Thus, since the addition element is not zero, the rank deficiency is not easily generated in the controllable matrix.

Elements in the error matrix $\Delta$, an element which does not influence a calculation of a rank of a controllable matrix of the corrected state space model may be set to zero element. According to this configuration, the influence of the error matrix $\Delta$ on the system is more reduced by setting the value of the element unnecessary for a rank calculation of the controllable matrix of the corrected state space model to zero. Therefore, an amount of the deviation between the corrected state space model and the state space model of the actual control object is further decreased.

The control object may include a suspension apparatus provided with a damper and a spring interposed between an sprung member and an unsprung member (below-spring member) of a vehicle, and the control means may control a damping force for damping a vibration of the suspension apparatus. According to this configuration, the vibration of the suspension apparatus is suppressed by controlling the damping force of the suspension apparatus. Therefore, riding quality of the vehicle is improved.

One of other aspects of the present invention is a state feedback controller for calculating a control input of a system based on a state quantity of the system represented by a state space model, wherein the state feedback controller calculates the control input based on a state quantity of the system represented by a corrected state space model which is formed so as to represent a controllable system by adding an error matrix $\Delta$ to a state matrix of a state space model representing an uncontrollable system. In this case, the state feedback controller may calculate the control input by applying H-infinity state feedback control to a generalized plant designed based on the system represented by the corrected state space model. A magnitude of a non-zero element of the error matrix $\Delta$ may be 1/10 to 1/100 of a magnitude of a non-zero element of the state matrix. Elements in the error matrix $\Delta$, an element which does not influence a calculation of a rank of a controllable matrix of the corrected state space model may be set to a zero element. According to the present invention of such a state feedback controller, the same operations and effects as the invention of the above state feedback control apparatus are also obtained.

One of other aspects of the present invention is a state feedback control method for state-feedback controlling a control object, including a control input calculating step for calculating a control input of a system based on a state quantity of the system represented by a corrected state space model, the corrected state space model being formed so as to represent a controllable system by adding an error matrix $\Delta$ to a state matrix of a state space model of the control object representing an uncontrollable system, and a control step for controlling the control object based on the control input calculated in the control input calculating step. In this case, the control input may be calculated by applying H-infinity state feedback control to a generalized plant designed based on the system represented by the corrected state space model in the control input calculating step. According to the present invention of such a method, the same operations and effects as the invention of the above state feedback control apparatus are also obtained.

BRIEF DESCRIPTION OF THE DRAWINGS

Fig. 1 is a block diagram of a system represented by a state space model of a certain control object;
Fig. 2 is a block diagram of a system represented by a corrected state space model obtained by adding an error matrix $\Delta$ to the state space model of Fig. 1;
Fig. 3 is a block diagram showing a state feedback loop of the system represented by the corrected state space model of Fig. 2;
Fig. 4 is an entire schematic diagram of a suspension apparatus of a vehicle according to an embodiment of the present invention;
Fig. 5 is a flowchart showing a flow of a variable damping coefficient calculation processing executed by a nonlinear H-infinity controller of a micro computer;
Fig. 6 is a flowchart showing a flow of a requested damping force calculation processing executed by a requested damping force calculation section of the micro computer;
Fig. 7 is a flowchart showing a flow of a requested step number determination processing executed by a requested step number determination section of the micro computer;

Fig. 8 is a block diagram of a closed loop system S in which a state quantity of a generalized plant G is fed back;

Fig. 9 is a diagram showing motion of suspension apparatuses according to the present embodiment as a two wheel model of the vehicle;

Fig. 10 is a block diagram of the system represented by the state space model of the control object according to the present embodiment in the case where the two wheel model is the control object;

Fig. 11 is a block diagram of the system represented by the corrected state space model according to the present embodiment;

Fig. 12 is a block diagram of the closed loop system in which state feedback is performed in the state of the generalized plant designed based on the corrected state space model; and

Fig. 13 is a block diagram of a system represented by another corrected state space model according to the present embodiment.

DETAILED DESCRIPTION OF THE INVENTION

Hereinafter, an embodiment of the present invention will be described.

A state space model (a state space representation) of a control object is described for example as in the following equation (eq.1) with using a control input u, an output z, and a state quantity x.

$$\begin{cases} \dot{x} = Ax + Bu \\ z = Cx + Du \end{cases} \quad (\text{eq.1})$$

*wherein* : $\dot{x} = dx/dt$

It should be noted that the equation (eq.1) shows a model of a linear time-invariant system.

In the above equation (eq.1), A, B, C, D denote system coefficient matrices of the state space model. The matrix A is called a state matrix (or a system matrix), the matrix B is called an input matrix, the matrix C is called an output matrix, and the matrix D is called a transfer matrix.

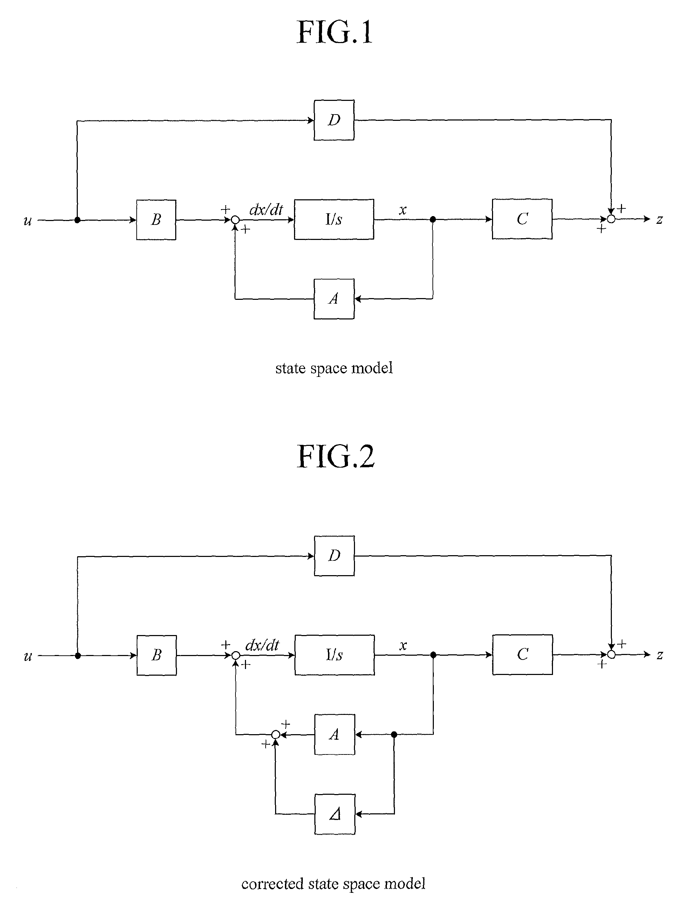

Fig. 1 is a block diagram of a system represented by the state space model shown as the equation (eq.1). In the figure, a block represented as l/s indicates a time integral, and blocks represented by A, B, C, D indicate the system coefficient matrices.

A necessary and sufficient condition for determining that the system represented by the state space model is controllable is that a controllable matrix $U_c$($n \times nm$) of the state space model has full rank (rank$U_c$=n). The controllable matrix $U_c$ of the state space model shown as the equation (eq.1) is represented as in the following equation (eq.2).

$$U_c = \begin{bmatrix} B & AB & \cdot & \cdot & \cdot & A^{n-1}B \end{bmatrix}, (n \times nm) \quad (\text{eq.2})$$

The state matrix A and the input matrix B are for example represented as in the following equation (eq.3).

$$A = \begin{bmatrix} 2 & 0 \\ 1 & -1 \end{bmatrix}, \qquad B = \begin{bmatrix} 0 \\ 1 \end{bmatrix} \quad (\text{eq.3})$$

In this case, the controllable matrix $U_c$ is represented as in the following equation (eq.4).

$$U_c = \begin{bmatrix} B & AB \end{bmatrix} = \begin{bmatrix} 0 & 0 \\ 1 & -1 \end{bmatrix} \quad (\text{eq.4})$$

A rank of the controllable matrix $U_c$ represented by the equation (eq.4) is 1(rank $U_c$=1). Since full rank is 2(Full Rank=2), the controllable matrix $U_c$ does not have full rank. Therefore, in the case where the state matrix A and the input matrix B of the state space model are represented by the above equation (eq.3), the system represented by that state space model is uncontrollable.

The following equation (eq.5) is a corrected state space model obtained by correcting the state space model by adding an error matrix Δ to the state matrix A of the state space model shown in the equation (eq.1).

$$\begin{cases} \dot{x} = (A + \Delta)x + Bu \\ z = Cx \qquad + Du \end{cases} \quad \text{(eq.5)}$$

As understood from the equation (eq.5), the state matrix to be multiplied by the state quantity x in the state equation is corrected by the error matrix Δ. The corrected matrix A+Δ is called a corrected state matrix in the present specification. Fig. 2 is a block diagram of a system represented by the corrected state space model. As shown in Fig. 2, the error matrix Δ is added into the corrected state space model as an additive error of the state matrix A.

The error matrix Δ has the same form as the state matrix A. In the case where the state matrix A is a 2-by-2 matrix, the error matrix Δ is for example represented as in the following equation (eq.6).

$$\Delta = \begin{bmatrix} \Delta_{11} & \Delta_{12} \\ \Delta_{21} & \Delta_{22} \end{bmatrix} \quad \text{(eq.6)}$$

When the state matrix A and the input matrix B are represented as in the above equation (eq.3), a controllable matrix $U_c{}^*$ of the corrected state space model is represented as in the following equation (eq.7) with using the corrected state matrix A+Δ and the input matrix B.

$$U_c{}^* = \begin{bmatrix} B & (A + \Delta)B \end{bmatrix} = \begin{bmatrix} \begin{bmatrix} 0 \\ 1 \end{bmatrix} & \begin{bmatrix} 2 + \Delta_{11} & \Delta_{12} \\ 1 + \Delta_{21} & -1 + \Delta_{22} \end{bmatrix} \begin{bmatrix} 0 \\ 1 \end{bmatrix} \end{bmatrix} = \begin{bmatrix} 0 & \Delta_{12} \\ 1 & -1 + \Delta_{22} \end{bmatrix} \quad \text{(eq.7)}$$

In the above equation (eq.7), when $\Delta_{12}$ is a non-zero element (an element which is not zero), a rank of the controllable matrix $U_c{}^*$ is 2(rank$U_c{}^*$=2). That is, the controllable matrix $U_c{}^*$ has full rank, and thereby the system represented by the corrected state space model becomes controllable. In such a way, controllability of the then-uncontrollable system is recovered by correcting the state matrix A by the error matrix Δ.

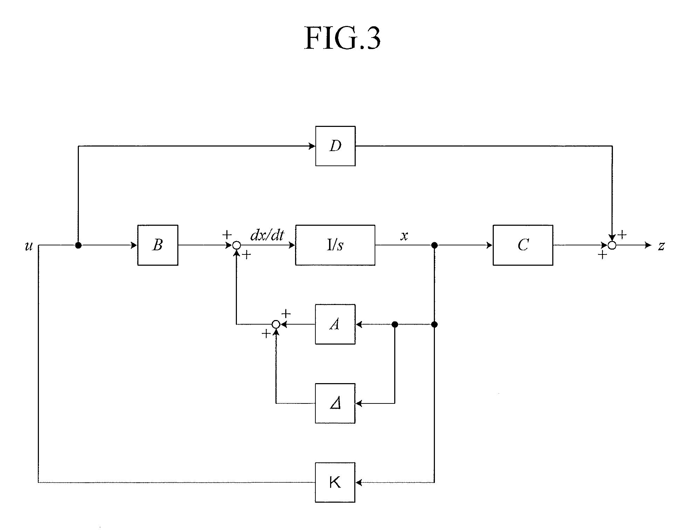

Fig. 3 is a block diagram showing a state feedback loop of the controllable system represented by the corrected state space model. As shown in this closed loop system, a state feedback controller K calculates the control input u of the system based on the state quantity x of the system represented by the corrected state space model. By the calculated control input u, the control object is state-feedback controlled.

However, even if the error matrix Δ is added to the state matrix, sometimes the controllable matrix $U_c{}^*$ does not have full rank. For example, in the case where $\Delta_{12}$ is zero in the above example, even when other elements are non-zero, first row elements of the controllable matrix $U_c{}^*$ are all zero. Thus, the rank is 1(rank$U_c{}^*$ is=1). In this case, the system becomes uncontrollable. Therefore, there is a need for setting the elements of the error matrix Δ such that the system represented by the corrected state space model becomes controllable. That is, there is a need for setting the elements of the error matrix Δ such that the controllable matrix $U_c{}^*$ of the corrected state space model has full rank.

The non-zero elements in the elements of the error matrix Δ may have so small values so as to have the different number of digits from non-zero elements of the state matrix A. If absolute values of the elements of the error matrix Δ are in a similar range to absolute values of the elements of the state matrix A, there is a possibility that rank deficiency is generated in the controllable matrix $U_c{}^*$ of the corrected state space model, thereby the controllable matrix $U_c{}^*$ does not have full rank. For example, in the case where the state matrix A and the input matrix B are represented as in the following equation (eq.8) and the error matrix Δ is represented as in the above equation (eq.6), the controllable matrix $U_c{}^*$ is represented as in the following equation (eq.9).

$$A = \begin{bmatrix} a_{11} & a_{12} \\ a_{21} & a_{22} \end{bmatrix}, \qquad B = \begin{bmatrix} 0 \\ 1 \end{bmatrix} \quad \text{(eq.8)}$$

*wherein* : $a_{11}, a_{12}, a_{21}, a_{22} \neq 0$

$$U_c{}^* = \begin{bmatrix} B & (A+\Delta)B \end{bmatrix} = \begin{bmatrix} 0 & a_{12} + \Delta_{12} \\ 1 & a_{22} + \Delta_{22} \end{bmatrix} \quad \text{(eq.9)}$$

When a value of $\Delta_{12}$ is equal to" $-a_{12}$" in the equation (eq.9), the first row elements are all zero, and the rank deficiency is generated in the controllable matrix $U_c{}^*$. Therefore, the controllable matrix $U_c{}^*$ does not have full rank.

Meanwhile, when a magnitude of the elements of the state matrix A and a magnitude of the elements of the error matrix $\Delta$ are different from each other in terms of the number of digits, the additional elements in the controllable matrix $U_c{}^*$ do not become zero due to a setoff by an addition. Therefore, the rank deficiency generated by including a lot of zero elements in the elements of the controllable matrix $U_c{}^*$ is prevented.

When the non-zero elements of the error matrix $\Delta$ have too small values, the error matrix $\Delta$ approximates a zero matrix. Thus, substantial controllability cannot be given to the system. Therefore, it is preferable that the non-zero elements of the error matrix $\Delta$ have appropriately small values. In this case, when the non-zero elements of the error matrix $\Delta$ have a magnitude of about 1/10 to 1/100 of the non-zero elements of the state matrix A, the controllability of the system represented by the corrected state space model is not deteriorated, and an influence of the error due to an addition of the error matrix $\Delta$ is sufficiently suppressed.

Hereinafter, a mode in which the present invention is applied to damping force control of suspension apparatuses of a vehicle will be described.

[Configuration of Suspension Control Apparatus]

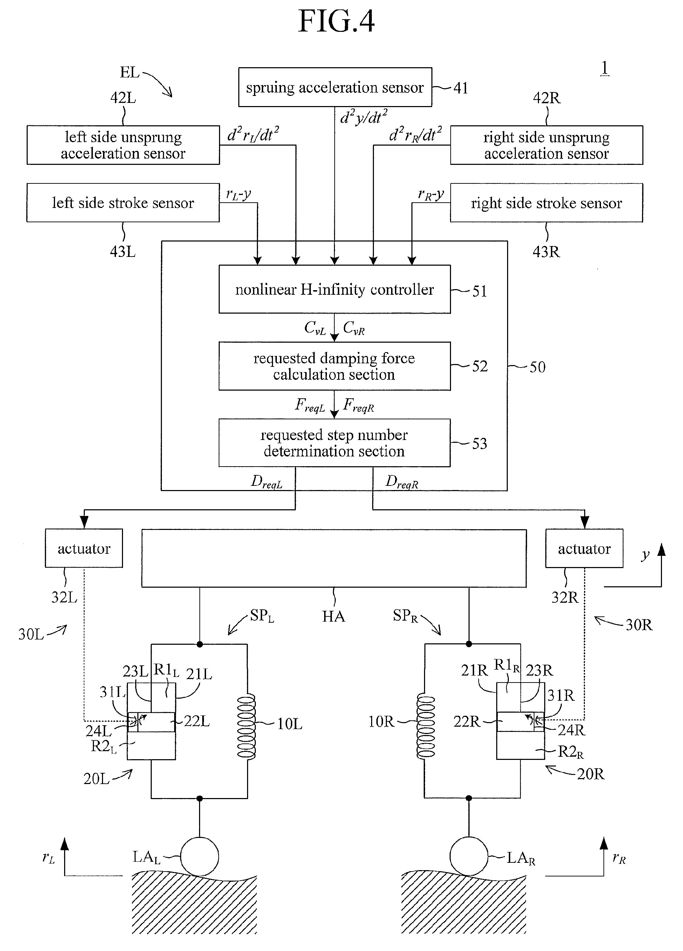

Fig. 4 is an entire schematic diagram of a suspension control apparatus of the vehicle. This suspension control apparatus 1 is provided with a right side suspension apparatus $SP_R$, a left side suspension apparatus $SP_L$, and an electric control apparatus EL. The right side suspension apparatus $SP_R$ is attached on the side of a right wheel of the vehicle, and the left side suspension apparatus $SP_L$ is attached on the side of a left wheel of the vehicle. Structures of the right side suspension apparatus $SP_R$ and the left side suspension apparatus $SP_L$ are the same. In the following description, terms indicating the left and right sides of the configurations will be omitted when configurations of both the suspension apparatuses are collectively described,.

The suspension apparatuses $SP_R$, $SP_L$ are provided with suspension springs 10R, 10L, and dampers 20R, 20L. The suspension springs 10R, 10L and the dampers 20R, 20L are interposed between a sprung member HA and unsprung members $LA_R$, $LA_L$ of the vehicle, one ends (lower ends) thereof are connected to the unsprung members $LA_R$, $LA_L$, and the other ends (upper ends) thereof are connected to the sprung member HA. The suspension springs 10R, 10L absorb (buffer) relative vibrations between the unsprung members $LA_R$, $LA_L$ and the sprung member HA. The dampers 20R, 20L are arranged in parallel to the suspension springs 10R, 10L, and damp the vibration by generating resistance to a vibration of the sprung member HA relative to the unsprung members $LA_R$, $LA_L$. It should be noted that knuckles coupled to the wheels, lower arms with one ends coupled to the knuckles, and the like correspond to the unsprung members $LA_R$, $LA_L$. The sprung member HA is supported by the suspension springs 10R, 10L and the dampers 20R, 20L. A vehicle body is included in the sprung member HA.

The dampers 20R, 20L are provided with cylinders 21R, 21L, pistons 22R, 22L, and piston rods 23R, 23L. The cylinders 21R, 21L are hollow members in which a viscous fluid such as oil is filled. Lower ends of the cylinders 21R, 21L are connected to the lower arms serving as the unsprung members $LA_R$, $LA_L$. The pistons 22R, 22L are arranged in the cylinders 21R, 21L. The pistons 22R, 22L are movable in the axial direction inside the cylinders 21R, 21L. The piston rods 23R, 23L are bar shape members. The piston rods 23R, 23L are connected to the pistons 22R, 22L at one ends, and extend upward in the axial direction of the cylinders 21R, 21L to protrude outward from upper ends of the cylinders 21R, 21L. The piston rods 23R, 23L connect to the vehicle body serving as the sprung member HA at the other ends.

As shown in the figure, upper chambers $R1_R$, $R1_L$ and lower chambers $R2_R$, $R2_L$ are separately formed in the cylinders 21R, 21L by the pistons 22R, 22L arranged inside the cylinders 21R, 21L. Communication passages 24R, 24L are formed in the pistons 22R, 22L. The upper chambers $R1_R$, $R1_L$ communicate with the lower chambers $R2_R$, $R2_L$ via the communication passages 24R, 24L.

In the dampers 20R, 20L with the above structure, when the sprung member HA is vibrated in the vertical direction (up and down direction) relative to the unsprung members $LA_R$, $LA_L$ upon the vehicle traveling over an uneven portion of a road surface or the like, the pistons 22R, 22L connected to the sprung member HA via the piston rods 23R, 23L are relatively displaced in the axial direction in the cylinders 21R, 21L connected to the unsprung members $LA_R$, $LA_L$. In accordance with the relative displacement, the viscous fluid flow through the communication passages 24R, 24L. When the viscous fluid flow through the communication passages 24R, 24L, resistance forces generated. The resistance forces act as damping forces against the vibration in the vertical direction. Thereby, the vibration of the sprung member HA relative to the unsprung members $LA_R$, $LA_L$ is damped. It should be noted that a magnitude of the damping forces is increased more as vibration speeds of the pistons 22R, 22L relative to the cylinders 21R, 21L (these speeds are corresponding to sprung-unsprung relative speeds described later) are increased more.

Variable throttle mechanisms 30R, 30L are attached to the suspension apparatuses $SP_R$, $SP_L$. The variable throttle mechanisms 30R, 30L have valves 31R, 31L, and actuators 32R, 32L. The valves 31R, 31L are provided in the communication passages 24R, 24L. A path sectional area of the communication passages 24R, 24L, or the number of the communication passages 24R, 24L are changed by actuating the valves 31R, 31L. That is, an opening degree OP of the communication passages 24R, 24L is changed by actuating the valves 31R, 31L. The valves 31R, 31L are for example formed by rotary valves built into the communication passages 24R, 24L. By means of changing the rotational angle of the rotary valve, the path sectional area of the communication passages 24R, 24L or the number of the connection passages 24R, 24L can be changed. The actuators 32R, 32L are connected to the valves 31R, 31L. In accordance with the actuation of the actuators 32R, 32L, the valves 31R, 31L are actuated. In the case where the valves 31R, 31L are the rotary valves as described above, the actuators 32R, 32L may be a motors for rotating the rotary valves.

When the Opening degree OP is changed as a result of the valves 31R, 31L being operated by the actuators 32R, 32L, the magnitude of the resistance which acts on the viscous fluid flowing through the communication passages 24R, 24L changes. The resistance forces serves as the damping forces against the vibration as described above. Therefore, when the opening degree OP is changed, the damping force characteristics of the dampers 20R, 20L change. It should be noted that the damping force characteristics refers to a characteristic which determines change in the magnitude of the damping forces with speeds of the pistons 22R, 22L in relation to the cylinders 21R, 21L (that is, the sprung-unsprung relative speeds). In the case where the damping forces are proportional to the speeds, the damping force characteristics are represented by damping coefficients.

In the present embodiment, the opening degree OP is set stepwise. Therefore, changing of the opening degree OP results in a stepwise change in the damping force characteristics of the dampers 20R, 20L. The damping force characteristics are represented by the set step numbers of the set opening degree OP. That is, the damping force characteristics are expressed in the form of step numbers in accordance with the set step numbers of the opening degree OP such as first, second, .... In this case, each step number representing a damping force characteristics can be set such that the greater the numeral representing the step numbers, the greater the damping forces. The set step numbers representing the damping force characteristics is changed through operation of the variable throttle mechanisms 30R, 30L as described above.

Next, the electric control apparatus EL will be described. The electric control apparatus EL includes a sprung acceleration sensor 41, a right side unsprung acceleration sensor 42R, a left side unsprung acceleration sensor 42L, a right side stroke sensor 43R, a left side stroke sensor 43L, and a micro computer 50.

The sprung acceleration sensor 41 is attached to the vehicle body, detects a sprung member acceleration $d^2y/dt^2$ serving as acceleration in the vertical direction of the sprung member HA in relation to an absolute space, and outputs a signal representing the detected sprung acceleration $d^2y/dt^2$. The right side unsprung acceleration sensor 42R is attached to the right side unsprung member $LA_R$, detects a right side unsprung acceleration $d^2r_R/dt^2$ serving as an acceleration in the vertical direction of the right side unsprung member $LA_R$ in relation to the absolute space, and outputs a signal representing the detected right side unsprung acceleration $d^2r_R/dt^2$. The left side unsprung acceleration sensor 42L is attached to the left side unsprung member $LA_L$, detects a left side unsprung acceleration $d^2r_L/de$ serving as an acceleration in the vertical direction of the left side unsprung member $LA_L$ in relation to the absolute space, and outputs a signal representing the detected left side unsprung acceleration $d^2r_L/de$.

The right side stroke sensor 43R is attached between the sprung member HA and the right side unsprug member $LA_R$, detects a sprung-right side unsprung relative displacement $r_R$-y, and outputs a signal representing the detected sprung-right side unsprung relative displacement $r_R$-y. The sprung-right side unsprung relative displacement $r_R$-y is a difference between a sprung member displacement y serving as a displacement in the vertical direction of the sprung member HA from a reference position and a right side unsprung member displacement $r_R$ serving as a displacement in the vertical direction of the right side unsprung member $LA_R$ from a reference position. It should be noted the displacement $r_R$-y is equal to a displacement of the right side piston 22R relative to the right side cylinder 21R in the right side damper 20R (right side stroke amount). The left side stroke sensor 43L is attached between the sprung member HA and the left side unsprung member $LA_L$, detects a sprung-left side unsprung relative displacement $r_L$-y, and outputs a signal representing the detected sprung-left side unsprung relative displacement $r_L$-y. The sprung-left side unsprung relative displacement $r_L$-y is a difference between the sprung displacement y and a left side unsprung displacement $r_L$ serving as a displacement in the vertical direction of the left side unsprung member $LA_L$ from a reference position. It should be noted that the displacement $r_L$-y is equal to a displacement of the left side piston 22L relative to the left side cylinder 21L in the left side damper 20L (left side stroke amount).

Each of the sprung acceleration sensor 41 and the unsprung acceleration sensors 42R, 42L detects upward acceleration as positive acceleration, and downward acceleration as negative acceleration. Each of the stroke sensors 43R, 43L detects relative displacement, for the case where upward displacement of the sprung member HA from the reference position is detected as positive displacement, downward displacement of the sprung member HA from the reference position is detected as negative displacement, upward displacement of each of the unsprung members $LA_R$, $LA_L$ from the reference position is detected as positive displacement, and downward displacement of each of the unsprung members $LA_R$, $LA_L$ is detected as negative displacement.

The micro computer 50 is electrically connected to the sprung acceleration sensor 41, the unsprung acceleration sensors 42R, 42L, and the stroke sensors 43R, 43L. The micro computer 50 determines a right side requested step number $D_{reqR}$ representing a target step number corresponding to a target damping force characteristic of the right side damper 20R, and a left side requested step number $D_{reqL}$ representing a target step number of a target damping force characteristic of the left side damper 20L on the basis of the signals output from the sensors. The micro computer 50 respectively output a command signal corresponding to the determined right side requested step number $D_{reqR}$ to the right side actuator 32R, and a command signal in corresponding to the determined left side requested step number $D_{reqL}$ to the left side actuator 32L. Both the actuators 32R, 32L are actuated based on the above command signals. As a result, the right side valve 31R and the left side valve 31L are actuated. In such a way, the micro computer 50 variously controls the damping force characteristics of the right side damper 20R and the left side damper 20L by controlling the right side variable throttle mechanism 30R and the left side variable throttle mechanism 30L to control the damping forces of the right side suspension apparatus $SP_R$ and the left side suspension apparatus $SP_L$ at the same time.

As can be understood from Fig. 4, the micro computer 50 includes a nonlinear H-infinity controller 51, a requested damping force calculation section 52, and a requested step number determination section 53. The nonlinear H-infinity controller 51 acquires the signals from the sensors 41, 42R, 42L, 43R, 43L, and calculates a right side variable damping coefficient $C_{vR}$ and a left side variable damping coefficient $C_{vL}$ as the control input u on the basis of the nonlinear H-infinity control theory. The right side variable damping coefficient $C_{vR}$ corresponds to a coefficient of a variable damping force (a right side variable damping force) relative to a vibration speed (a sprung-right side unsprung relative speed described later) which is varied by controlling. The right side variable damping force represents a variable force portion of the entire right side damping force to be generated in the right side suspension apparatus $SP_R$ The left side variable damping coefficient $C_{vL}$ corresponds to a coefficient of a variable damping force (a left side variable damping force) relative to a vibration speed (a sprung-left side unsprung relative speed described later) which is varied by the controlling. The left side variable damping force represents a variable force portion of the entire left side damping force to be generated in the left side suspension apparatus $SP_L$. The requested damping force calculation section 52 inputs the variable damping coefficients $C_{vR}$, $C_{vL}$, and calculates a right side requested damping force $F_{reqR}$ serving as a target damping force to be generated in the right side suspension apparatus $SP_R$, and a left side requested damping force $F_{reqL}$ serving as a target damping force to be generated in the left side suspension apparatus $SP_L$ based on the input variable damping coefficients $C_{vR}$, $C_{vL}$ The requested damping force calculation section 52 outputs both the calculated requested damping forces $F_{reqR}$, $F_{reqL}$. The requested step number determination section 53 inputs the requested damping forces $F_{reqR}$, $F_{reqL}$, and determines the right side requested step number $D_{reqR}$ and the left side requested step number $D_{reqL}$ both serving as the control target step numbers of the damping force characteristics based on the input requested damping forces $F_{reqR}$, $F_{reqL}$. The requested step number determination section 53 outputs signals corresponding to the determined requested step numbers $D_{reqR}$, $D_{reqL}$ to the right side actuator 32R and the left side actuator 32L as instruction signals.

[Damping Force Control of Suspension Apparatuses]

In the suspension control apparatus 1 formed as described above, when a detected value of the sprung acceleration sensor 41 exceeds a predetermined threshold value (that is, when there is a need for vibration suppression control of the suspension apparatuses $SP_R$, $SP_L$), the nonlinear H-infinity controller 51 of the micro computer 50 executes a variable damping coefficient calculation processing, the requested damping force calculation section 52 executes a requested damping force calculation processing, and the requested step number determination section 53 executes a requested step number determination processing respectively repeatedly every predetermined short time.

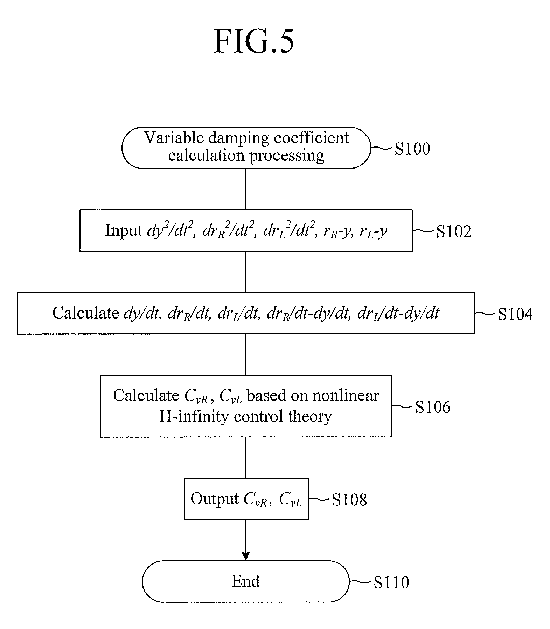

The nonlinear H-infinity controller 51 calculates the variable damping coefficients $C_{vR}$, $C_{vL}$ as the control input u by executing the variable damping coefficient calculation processing shown in a flowchart of Fig. 5. This processing will be described based on Fig. 5. The nonlinear H-infinity controller 51 starts the processing in Step 100 (hereinafter, a step number is abbreviated as S) of Fig. 5. In the next S102, the nonlinear H-infinity controller 51 acquires the sprung acceleration $d^2y/dt^2$ from the sprung acceleration sensor 41, the right side unsprung acceleration $d^2r_R/dt^2$ from the right side unsprung acceleration sensor 42R, the left side unsprung acceleration $d^2r_L/de$ from the left side unsprung acceleration sensor 42L, the sprung-right side unsprung relative displacement $r_R$-y from the right side stroke sensor 43R, and the sprung-left side unsprung relative displacement $r_L$-y from the left side stroke sensor 43L. Next, in S104, the nonlinear H-infinity controller 51 respectively time-integrates the sprung acceleration $d^2y/dt^2$ and the unsprung accelerations $d^2r_R/dt^2$, $d^2r_L/dt^2$ to thereby obtain a sprung speed dy/dt serving as a vertical speed of the sprung member HA, a right side unsprung speed $dr_R/dt$ serving as a vertical speed of the right side unsprung member $LA_R$, and a left side unsprung speed $dr_L/dt$ serving as a vertical speed of the left side unsprung member $LA_L$. Further, the nonlinear H-infinity controller 51 time-differentiates the sprung-right side unsprung relative displacement $r_R$-y to obtain a sprung-right side unsprung relative speed $dr_R/dt$-dy/dt serving as a difference between the sprung speed dy/dt and the right side unsprung speed $dr_R/dt$, and time-differentiates the sprung-left side unsprung relative displacement $r_L$-y to obtain a sprung-left side unsprung relative speed $dr_L/dt$-dy/dt serving as a difference between the sprung speed dy/dt and the left side unsprung speed $dr_L/dt$. Each of the sprung speed dy/dt and the unsprung speeds $dr_R/dt$, $dr_L/dt$ is calculated as positive speed when it is the speed in upward direction, and calculated as negative speed when it is the speed in downward direction. Each of the sprung-unsprung relative speeds $dr_R/dt$-dy/dt, $dr_L/dt$-dy/dt is calculated as positive speed when it is the relative speed in the direction in which a gap between the sprung member HA and the unsprung members $LA_R$, $LA_L$ is reduced, that is, speed toward the side where the dampers 20R, 20L are compressed, and calculated as negative speed when it is the relative speed in the direction in which the gap is extended, that is, speed toward the side where the dampers 20R, 20L are expanded. It should be noted that the sprung-unsprung relative speeds $dr_R/dt$-dy/dt, $dr_L/dt$-dy/dt represent vibration speeds of the suspension apparatuses $SP_R$, $SP_L$ due to external inputs. The speeds are equal to the speeds of the pistons 22R, 22L relative to the cylinders 21R, 21L described above.

Next, in S106, the nonlinear H-infinity controller 51 calculates the right side variable damping coefficient $C_{vR}$ and the left side variable damping coefficient $C_{vL}$ based on the nonlinear H-infinity control theory. The variable damping coefficients $C_{vR}$, $C_{vL}$ represent the variable amount of the damping coefficient which is varied by controlling. In this case, although detailed description will be given later, the nonlinear H-infinity controller 51 calculates the control input u that is the variable damping coefficients $C_{vR}$, $C_{vL}$, such that $L_2$ gain ($L_2$ gain from a disturbance w to an evaluation output z) of a system (a generalized plant) represented by the corrected state space model in which the control input u is represented by the variable damping coefficients $C_{vR}$, $C_{vL}$ becomes less than a positive constant Y. After calculating the variable damping coefficients $C_{vR}$, $C_{vL}$ in S106, the nonlinear H-infinity controller 51 outputs the variable damping coefficients $C_{vR}$, $C_{vL}$ in S108. After that, the nonlinear H-infinity controller 51 advances to S110 and finishes this processing. The nonlinear H-infinity controller 51 has functions corresponding to the state feedback controller of the present invention. A step of executing the variable damping coefficient calculation processing shown in Fig. 5 corresponds to a control input calculating step of the present invention.

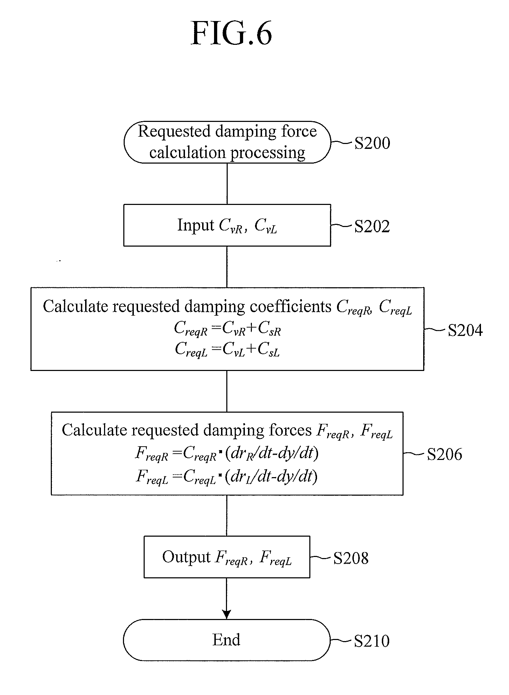

Fig. 6 is a flowchart showing a flow of the requested damping force calculation processing executed by the requested damping force calculation section 52. The requested damping force calculation section 52 starts this processing in S200 of Fig. 6, and in the next S202, the requested damping force calculation section 52 inputs the variable damping coefficients $C_{vR}$, $C_{vL}$. Next, in S204, the requested damping force calculation section 52 calculates a right side requested damping coefficient $C_{reqR}$ and a left side requested damping coefficient $C_{reqL}$. The right side requested damping coefficient $C_{reqR}$ is calculated by adding a preliminarily set right side linear damping coefficient $C_{sR}$ to the right side variable damping coefficient $C_{vR}$. The left side requested damping coefficient $C_{reqL}$ is calculated by adding a preliminarily set left side linear damping coefficient $C_{sL}$ to the left side variable damping coefficient $C_{vL}$. The linear damping coefficients $C_{sR}$, $C_{sL}$ represent fixed amount (linear amount) of damping coefficients not varied by the control. Next, the requested damping force calculation section 52 calculates the right side requested damping force $F_{reqR}$ and the left side requested damping force $F_{reqL}$ in S206. The right side requested damping force $F_{reqR}$ is calculated by multiplying the right side requested damping coefficient $C_{reqR}$ by the sprung-right side unsprung relative speed $dr_R/dt$-dy/dt. The left side requested damping force $F_{reqL}$ is calculated by multiplying the left side requested damping coefficient $C_{reqL}$ by the sprung-left side unsprung relative speed $dr_L/dt$-dy/dt. Then, the requested damping force calculation section 52 goes on to S208 and outputs the requested damping forces $F_{reqR}$, $F_{reqL}$. After that, the requested damping force calculation section 52 advances to S210 and finishes this processing.

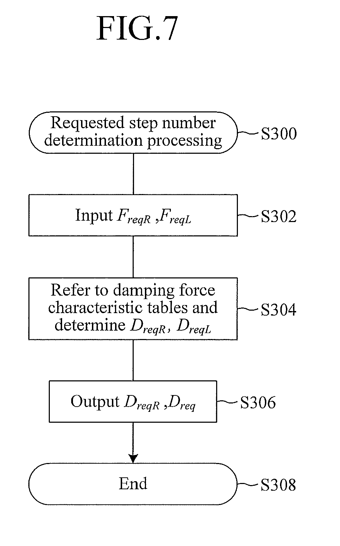

Fig. 7 is a flowchart showing a flow of the requested step number determination processing executed by the requested step number determination section 53. The requested step number determination section 53 starts this processing in S300 of Fig. 7, and in the next S302, the requested step number determination section 53 inputs the requested damping forces $F_{reqR}$, $F_{reqL}$. Next, the required step number determination section 53 determines the right side requested step number $D_{reqR}$ and the left side requested step number $D_{reqL}$ in S304. It should be noted that the micro computer 50 has a right side damping force characteristic table and a left side damping force characteristic table. The right side characteristic table stores a characteristic profile of the magnitude of damping forces generated in the right side damper 20R in relation to the sprung-right side unsprung relative speeds $dr_R/dt-dy/dt$ for each of the step numbers representing the damping force characteristics of the right side damper 20R. The left side damping force characteristic table stores a characteristic profile of the magnitude of the damping forces generated in the left side damper 20L in relation to the sprung-left side unsprung relative speeds $dr_L/dt-dy/dt$ for each of the step numbers representing the damping force characteristics of the left side damper 20L. In S304, the requested step number determination section 53 refers to the right side damping force characteristic table so as to determine the right side requested step number $D_{reqR}$ and refers to the left side damping force characteristic table so as to determine the left side requested step number $D_{reqL}$. Specifically, in S304, the requested step number determination section 53 selects the damping forces corresponding to the sprung-right side unsprung relative speeds $dr_R/dt-dy/dt$ for each of the step numbers with reference to the right side damping force characteristic table. Then, the closest damping force to the right side requested damping force $F_{reqR}$ is picked out from the selected damping forces. The step number corresponding to the damping force picked out is determined as the right side requested step number $D_{reqR}$. Further, the requested step number determination section 53 selects the damping forces corresponding to the sprung-left side unsprung relative speeds $dr_L/dt-dy/dt$ for each of the step numbers with reference to the left side damping force characteristic table. Then, the closest damping force to the left side requested damping force $F_{reqL}$ is picked out from the selected damping forces. The step number corresponding to the damping force picked out is determined as the left side requested step number $D_{reqL}$.

After determining the requested step numbers $D_{reqR}$, $D_{reqL}$ in S304, the requested step number determination section 53 advances to S306 and outputs command signals corresponding to the requested step numbers $D_{reqR}$, $D_{reqL}$ to the actuators 32R, 32L. After that, the requested step number determination section 53 advances to S308 and finishes this processing. Upon receiving the command signals, the actuators 32R, 32L act based on the command signals. As a result, the valves 31R, 31L are actuated, and the variable throttle mechanisms 30R, 30L are controlled such that the step numbers representing the damping force characteristics of the dampers 20R, 20L become the requested step numbers $D_{reqR}$, $D_{reqL}$. In such a way, the damping forces of the suspension apparatuses $SP_R$, $SP_L$ are controlled at the same time.

As understood from the above description, the requested damping force calculation section 52 and the requested step number determination section 53 control the damping forces of the suspension apparatuses $SP_R$, $SP_L$ based on the variable damping coefficients $C_{vR}$, $C_{vL}$ calculated by the nonlinear H-infinity controller 51 serving as the state feedback controller. By the above described damping force control, the vibrations of the suspension apparatuses $SP_R$ and $SP_L$ are controlled. The requested damping force calculation section 52 and the requested step number determination section 53 correspond to control means of the present invention. A step of executing the requested damping force calculation processing shown in Fig. 6 and a step of executing the requested step number determination processing shown in Fig. 7 correspond to a control step of the present invention. The micro computer 50 provided with the nonlinear H-infinity controller 51, the requested damping force calculation section 52, and the requested step number determination section 53 corresponds to a state feedback control apparatus of the present invention.

[Control Theory of Variable Damping Coefficients $C_{vR}$, $C_{vL}$]

The variable damping coefficients $C_{vR}$, $C_{vL}$ are calculated by the nonlinear H-infinity controller 51. Whether a riding quality of the vehicle is good or bad is determined by a manner in which an ideal variable damping coefficients $C_{vR}$, $C_{vL}$ are calculated in accordance with the traveling state of the vehicle and the damping forces are controlled on the basis of the calculated variable damping coefficients. In the present embodiment, the variable damping coefficients $C_{vR}$, $C_{vL}$ are calculated as the control input u on the basis of the nonlinear H-infinity state feedback control to the system. A calculation method of the variable damping coefficients $C_{vR}$, $C_{vL}$ by using the nonlinear H-infinity state feedback control in the present embodiment will be briefly described below.

1. Nonlinear H-infinity State Feedback Control Theory

Firstly, a nonlinear H-infinity state feedback control theory will be described.

1-1. Bilinear System

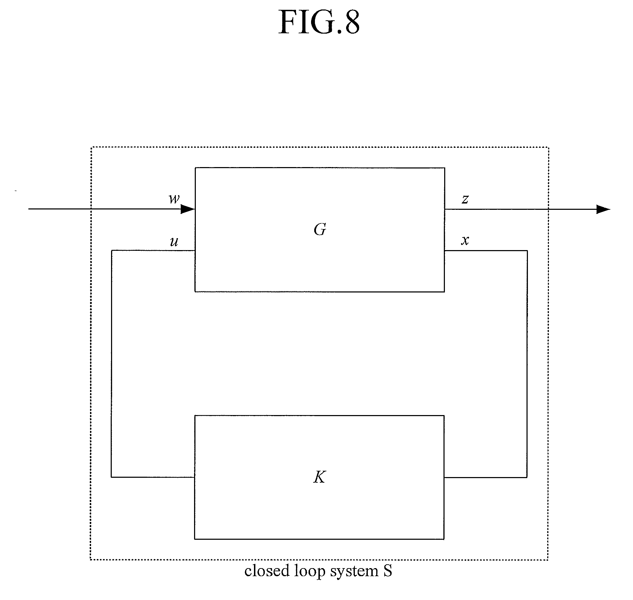

Fig. 8 is a block diagram of a closed loop system S in which the state quantity x of a generalized plant G is fed back. In this closed loop system S, w denotes the disturbance, z denotes the evaluation output, u denotes the control input, and x denotes the state quantity. A state space model (a state space representation) of the generalized plant G can be represented as in the following equation (eq.10) with using the disturbance w, the evaluation output z, the control input u, and the state quantity x.

$$\begin{cases} \dot{x} = f(x)x + g_1(x)w + g_2(x)u \\ z = h_1(x)x \quad\quad\quad + j_{12}(x)u \end{cases} \quad (eq.10)$$

*wherein* : $\dot{x} = dx/dt$

In a special case where the state space model is represented by a form shown in the following equation (eq. 11), the state space model is called a bilinear system.

$$\begin{cases} \dot{x} = Ax + B_1w + B_2(x)u \\ z = C_1x \quad\quad + D_{12}(x)u \end{cases} \quad (eq.11)$$

1-2. Nonlinear H-infinity State Feedback Control Problem

A nonlinear H-infinity state feedback control problem, that is, a control target in the nonlinear H-infinity state feedback control, is to design the state feedback controller K of the system such an influence of the disturbance w of the closed loop system S is prevented from appearing in the evaluation output z to a possible extent. This problem is equal to designing the state feedback controller K (=u=K(x)) such that the $L_2$ gain ($\|S\|_{L2}$) from the disturbance w to the evaluation output z of the closed loop system S becomes less than a given positive constant $\gamma$, that is, the following equation (eq.12) is satisfied.

$$\|S\|_{L2} = \sup_{w} \frac{\sqrt{\int_0^\infty |z(t)|^2 \, dt}}{\sqrt{\int_0^\infty |w(t)|^2 \, dt}} < \gamma \quad (eq.12)$$

1-3. Solution of the Nonlinear H-infinity State Feedback Control Problem

A necessary and sufficient condition to solve the nonlinear H-infinity state feedback control problem is that a positive definite function V(x) and a positive constant $\varepsilon$ satisfying a Hamilton-Jacobi partial differential inequality shown in an equation (eq.13) exist.

$$\frac{\partial V}{\partial x^T}f + \frac{1}{4\gamma^2}\frac{\partial V}{\partial x^T}g_1g_1^T\frac{\partial V}{\partial x} - \frac{1}{4}\frac{\partial V}{\partial x^T}g_2g_2^T\frac{\partial V}{\partial x} + h_1^Th_1 + \varepsilon x^Tx \le 0 \quad (eq.13)$$

In this case, one of the state feedback controller K (=u=K(x)) is given by the following equation (eq.14).

$$u = -\frac{1}{2}g_x^T(x)\frac{\partial V}{\partial x}(x) \quad (eq.14)$$

It is said that solving the Hamilton-Jacobi partial differential inequality is almost impossible. Therefore, the state feedback controller K cannot be solved analytically. However, in the case where the state space model is the bilinear system, if a positive definite symmetric matrix P satisfying a Riccati inequality shown in the following equation (eq.15) is existing, it is known that the nonlinear H-infinity state feedback control problem can be approximately solved. This Riccati inequality can be solved analytically.

$$PA + A^T P + \frac{1}{\gamma^2} PB_1 B_1^T P + C_{11}{}^T C_{11} + C_{12}{}^T C_{12} < 0 \qquad (eq.15)$$

In this case, one of the state feedback controller K (=u=K(x)) is given by the following equation (eq.16).

$$u = -D_{122}{}^{-1}\{(1 + m(x)x^T C_{11}{}^T C_{11} x)D_{122}{}^{-T} B_2{}^T(x)P + C_{12}\}x \qquad (eq.16)$$

In the equation (eq.15) and the equation (eq.16), $C_{11}$ is a matrix to be multiplied by the state quantity x in an output equation representing an output obtained by a frequency weight $W_s$ acting on the evaluation output, and $C_{12}$ is a matrix to be multiplied by the state quantity x in an output equation representing an output obtained by a frequency weight $W_u$ acting on the control input. $D_{122}$ is a matrix to be multiplied by the control input u in the output equation representing the output obtained by the frequency weight $W_u$ acting on the control input. In addition, m(x) is an arbitrary positive definite scalar function influencing a constrained condition of a nonlinear weight to be multiplied by the frequency weights $W_s$, $W_u$. In the case where the nonlinear weight does not act as a weight, m(x) can be set to 0.
Therefore, in the case where the state space model is the bilinear system, the state feedback controller K can be designed by solving the Riccati inequality. Thus, the control object can be state-feedback by the control input u calculated by the designed state feedback controller K,.

2. Designing of State Space Model

2-1. Derivation of Motion Equation of Suspension Apparatuses

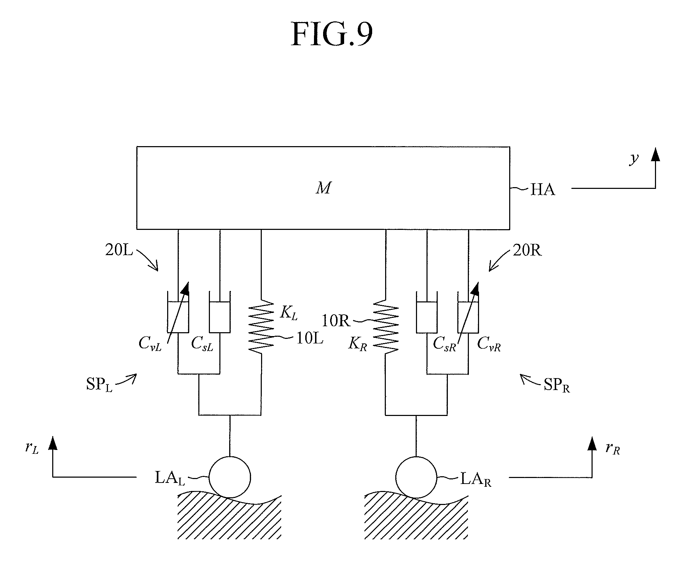

Fig. 9 is a diagram in which the suspension apparatuses $SP_R$, $SP_L$ shown in Fig. 4 are represented as a two wheel model of the vehicle. The two wheel model shows a vibration system serving as the control object in the present example. In the figure, M denotes a mass of the sprung member HA, $K_R$ denotes a spring constant of the right side suspension spring 10R, $K_L$ denotes a spring constant of the left side suspension spring 10L, $C_{sR}$ denotes the linear damping coefficient of the right side damper 20R, $C_{sL}$ denotes the linear damping coefficient of the left side damper 20L, $C_{vR}$ denotes the variable damping coefficient of the right side damper 20R, $C_{vL}$ denotes the variable damping coefficient of the left side damper 20L, y denotes the vertical displacement of the sprung member HA (the sprung vertical displacement), $r_R$ denotes the vertical displacement of the right side unsprung member $LA_R$ (the right side unsprung displacement), and $r_L$ denotes the vertical displacement of the left side unsprung member $LA_L$ (the left side unsprung displacement).
In the two wheel model shown in Fig. 9, a motion equation of the sprung member HA is represented by the following equation (eq.17).

$$M\ddot{y} = K_R(r_R - y) + K_L(r_L - y) + C_{sR}(\dot{r}_R - \dot{y}) + C_{sL}(\dot{r}_L - \dot{y}) + C_{vR}(\dot{r}_R - \dot{y}) + C_{vL}(\dot{r}_L - \dot{y})$$
$$(eq.17)$$

*wherein* :

$$\ddot{y} = d^2 y/dt^2, \quad \dot{y} = dy/dt, \quad \dot{r}_R = dr_R/dt, \quad \dot{r}_L = dr_L/dt$$

2-2. Designing of State Space Model

Based on the equation (eq.17), a state space model of the two wheel model is designed as shown in Fig.9. In this case, a state quantity $x_p$ is represented by the sprung-right side unsprung relative displacement $r_R$-y, the sprung-left side unsprung relative displacement $r_L$-y, and the sprung speed dy/dt. The disturbance w is represented by the right side unsprung speed $dr_R$/dt, and the left side unsprung speed $dr_L$/dt. The control input u is represented by the right side variable damping coefficient $C_{vR}$, and the left side variable damping coefficient $C_{vL}$. A state equation is described as in the following equation (eq.18).

$$\dot{x}_p = A_p x_p + B_{p1} w + B_{p2}(x_p) u \qquad \text{(eq.18)}$$

*wherein* :

$$x_p = \begin{bmatrix} r_R - y \\ r_L - y \\ \dot{y} \end{bmatrix}, \quad w = \begin{bmatrix} \dot{r}_R \\ \dot{r}_L \end{bmatrix}, \quad u = \begin{bmatrix} C_{vR} \\ C_{vL} \end{bmatrix}$$

$$A_p = \begin{bmatrix} 0 & 0 & -1 \\ 0 & 0 & -1 \\ \dfrac{K_R}{M} & \dfrac{K_L}{M} & -\dfrac{C_{sR} + C_{sL}}{M} \end{bmatrix}, \quad B_{p1} = \begin{bmatrix} 1 & 0 \\ 0 & 1 \\ \dfrac{C_{sR}}{M} & \dfrac{C_{sL}}{M} \end{bmatrix}, \quad B_{p2}(x_p) = \begin{bmatrix} 0 & 0 \\ 0 & 0 \\ \dfrac{r_R - \dot{y}}{M} & \dfrac{r_L - \dot{y}}{M} \end{bmatrix}$$

$$\dot{x}_p = dx_p / dt$$

wherein: $x_p$ denotes state quantity, w denotes disturbance, u denotes control input.
An output equation is described as in the following equation (eq.19).

$$z_p = C_{p1} x_p + D_{p12} u \qquad \text{(eq.19)}$$

In the case where an evaluation output $z_p$ is set to the sprung-right side unsprung relative displacement $r_R$-y and the sprung-left side unsprung relative displacement $r_L$-y, $z_p$, $C_{p1}$, and $D_{p12}$ are represented as follows.

$$z_p = \begin{bmatrix} r_R - y \\ r_L - y \end{bmatrix}, \quad C_{p1} = \begin{bmatrix} 1 & 0 & 0 \\ 0 & 1 & 0 \end{bmatrix}, \quad D_{p12} = \begin{bmatrix} 0 & 0 \\ 0 & 0 \end{bmatrix}$$

Notably, the evaluation output $z_p$ may be set to the sprung acceleration $d^2y/dt_2$ or the sprung speed dy/dt. A term in relation to the disturbance w may be added to the output equation so that the output equation is rewritten as "$z_p = C_{p1}x_p + D_{p11}w + D_{p12}u$".
With the equation (eq.18) and the equation (eq.19), the state space model of the control object shown in Fig. 9 is described as in the following equation (eq.20).

$$\begin{cases} \dot{x}_p = A_p x_p + B_{p1} w + B_{p2}(x_p) u \\ z_p = C_{p1} x_p \qquad\qquad + D_{p12} u \end{cases} \qquad \text{(eq.20)}$$

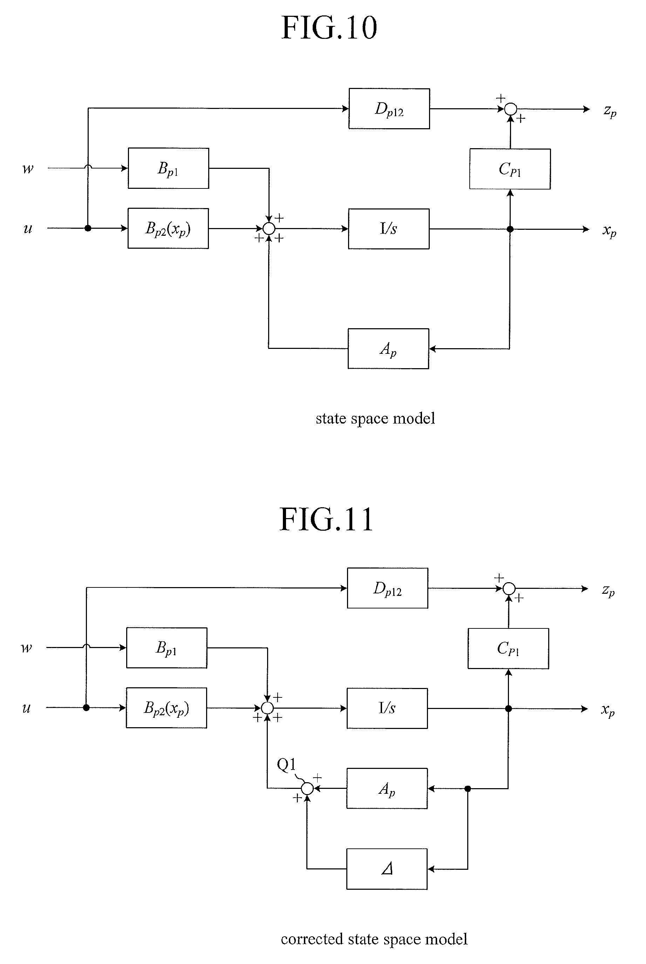

The state space model shown in the equation (eq.20) is the bilinear system. Fig. 10 is a block diagram of the system represented by the equation (eq.20).

3. Controllability of System Represented by State Space Model

A necessary and sufficient condition to obtain controllability of the system represented by the state space model of the equation (eq.20) is that the controllable matrix $U_c$ of this state space model has full rank. The controllable matrix $U_c$ is represented as in the following equation (eq.21).

$$U_c = \begin{bmatrix} B_{p2}(x_p) & A_p B_{p2}(x_p) & A_p^2 B_{p2}(x_p) \end{bmatrix} \quad (eq.21)$$

In the case where a state matrix $A_p$ and an input matrix $B_{p2}(x_p)$ are represented by the above equation (eq. 18), the controllable matrix $U_c$ is represented as in the following equation (eq.22).

$$U_c = \begin{bmatrix} 0 & 0 & -\dfrac{\dot{r}_R - \dot{y}}{M} & -\dfrac{\dot{r}_L - y}{M} & \alpha_R & \alpha_L \\[3mm] 0 & 0 & -\dfrac{\dot{r}_R - \dot{y}}{M} & -\dfrac{\dot{r}_L - y}{M} & \alpha_R & \alpha_L \\[3mm] \dfrac{\dot{r}_R - \dot{y}}{M} & \dfrac{\dot{r}_L - y}{M} & -\alpha_R & -\alpha_L & -\dfrac{(\dot{r}_R - \dot{y})}{M^2}\beta & -\dfrac{(\dot{r}_L - \dot{y})}{M^2}\beta \end{bmatrix} \quad (eq.22)$$

*wherein :*

$$\alpha_R = \frac{(C_{sR} + C_{sL})(\dot{r}_R - \dot{y})}{M^2}, \quad \alpha_L = \frac{(C_{sR} + C_{sL})(\dot{r}_L - \dot{y})}{M^2}, \quad \beta = K_R + K_L + \frac{C_{sR} + C_{sL}}{M}$$

As understood from the equation (eq.22), the controllable matrix $U_c$ is represented as a 3-by-6 matrix. Therefore, full rank of the controllable matrix $U_c$ is 3(Full rank=3). First row elements and second row elements in the controllable matrix $U_c$ are all the same. Thus, the rank deficiency is generated, and the rank of the controllable matrix $U_c$ becomes 2(rank$U_c$=2). That is, the controllable matrix $U_c$ does not have full rank. Therefore, the system represented by the state space model shown in the equation (eq.20) is uncontrollable.

The reason for that the controllable matrix $U_c$ does not have full rank is that the number of motion equation serving as a basis in designing of the model is one ,nevertheless the number of the control input u is two (the right side variable damping coefficient $C_{vR}$ and the left side variable damping coefficient $C_{vL}$). That is, the number of the motion equation is less than the number of the control input u.

4. Designing of Corrected State Space Model

In the present embodiment, a corrected state space model obtained by correcting the state space model of the control object shown in the equation (eq.20) is proposed. This corrected state space model is described as in the following equation (eq.23).

$$\begin{cases} \dot{x}_p = (A_p + \Delta)x_p + B_{p1}w + B_{p2}(x_p)u \\ z_p = C_{p1}x_p \qquad\qquad\qquad + D_{p12}u \end{cases} \quad (eq.23)$$

As understood from the equation (eq.23), the state quantity $x_p$ of the state equation is multiplied by a corrected state matrix $(A_p + \Delta)$ obtained by adding the error matrix $\Delta$ to the state matrix $A_p$ of the state space model of the equation (eq.20). The error matrix $\Delta$ is a preliminarily designed matrix, and gives an error (perturbation) to the state matrix $A_p$. That is, the corrected state space model shown in the equation (eq.23) is a model obtained by correcting the state space model by adding the error matrix $\Delta$ to the state matrix $A_p$ of the state space model representing the uncontrollable system shown in the equation (eq.20).

Fig. 11 is a block diagram of a system represented by this corrected state space model. As shown in Fig. 11, the error matrix Δ is added into the corrected state space model as an additive error of the state matrix $A_p$. The error matrix Δ is added to the state matrix $A_p$ at an adding point Q1. The error matrix Δ has the same form as the state matrix $A_p$ (3-by-3).

A necessary and sufficient condition for obtaining controllability of the system represented by the corrected state space model is that the controllable matrix $U_c{}^*$ of the corrected state space model has full rank. The controllable matrix $U_c{}^*$ of the corrected state space model is represented as in the following equation (eq.24).

$$U_c{}^* = \begin{bmatrix} B_{p2}(x_p) & (A_p + \Delta)B_{p2}(x_p) & (A_p + \Delta)^2 B_{p2}(x_p) \end{bmatrix} \qquad (eq.24)$$

In order to avoid a complicated calculation, the state matrix $A_p$ and the input matrix $B_{p2}(x_p)$ represented by the equation (eq.18) are respectively described as in the following equations (eq.25) and (eq.26).

$$A_p = \begin{bmatrix} 0 & 0 & -1 \\ 0 & 0 & -1 \\ a_{31} & a_{32} & a_{33} \end{bmatrix} \quad (eq.25), \quad B_{p2}(x_p) = \begin{bmatrix} 0 & 0 \\ 0 & 0 \\ b_1(x_p) & b_2(x_p) \end{bmatrix} \qquad (eq.26)$$

*wherein* :

$$a_{31} = \frac{K_R}{M}, \quad a_{32} = \frac{K_L}{M}, \quad a_{33} = -\frac{C_{sR} + C_{sL}}{M}, \quad b_1(x_p) = \frac{\dot{r}_R - \dot{y}}{M}, \quad b_2(x_p) = \frac{\dot{r}_L - \dot{y}}{M}$$

The error matrix Δ is for example represented as in the following equation (eq.27).

$$\Delta = \begin{bmatrix} 0.1a_{33} & 0 & 0 \\ 0 & 0 & 0 \\ 0 & 0 & 0 \end{bmatrix} \qquad (eq.27)$$

As understood from the equation (eq.27), a non-zero element $0.1a_{33}$ of the error matrix Δ has a magnitude of 1/10 of a non-zero element $a_{33}$ of the state matrix $A_p$. In the case where the state matrix $A_p$, the input matrix $B_{p2}(x_p)$, and the error matrix Δ are respectively represented as in the equation (eq.25), the equation (eq.26), and the equation (eq.27), the following equations (eq.28) and (eq.29) are established. The controllable matrix $U_c{}^*$ is represented as in the following equation (eq.30).

$$A_p + \Delta = \begin{bmatrix} 0.1a_{33} & 0 & -1 \\ 0 & 0 & -1 \\ a_{31} & a_{32} & a_{33} \end{bmatrix} \qquad (eq.28)$$

$$(A_p + \Delta)^2 = \begin{bmatrix} 0.01a_{33}{}^2 - a_{31} & -a_{32} & -1.1a_{33} \\ -a_{31} & -a_{32} & -a_{33} \\ 1.1a_{31}a_{33} & a_{32}a_{33} & -a_{31} - a_{32} + a_{33}{}^2 \end{bmatrix} \qquad (eq.29)$$

$$U_c{}^* = \begin{bmatrix} 0 & 0 & -b_1(x_p) & -b_2(x_p) & -1.1a_{33}b_1(x_p) & -1.1a_{33}b_2(x_p) \\ 0 & 0 & -b_1(x_p) & -b_2(x_p) & -a_{33}b_1(x_p) & -a_{33}b_2(x_p) \\ b_1(x_p) & b_2(x_p) & a_{33}b_1(x_p) & a_{33}b_2(x_p) & \gamma b_1(x_p) & \gamma b_2(x_p) \end{bmatrix} \quad (eq.30)$$

*wherein* : $\gamma = -a_{31} - a_{32} + a_{33}{}^2$

As understood from the equation (eq.30), elements in fifth and sixth columns in a first row of the controllable matrix $U_c{}^*$ are different from elements in fifth and sixth columns in a second row. Therefore, the rank deficiency due to the fact that the first row elements and the second row elements are all the same elements is prevented, and the rank of the controllable matrix $U_c{}^*$ becomes 3(rank$U_c{}^*$=3). That is, the controllable matrix $U_c{}^*$ has full rank, and the system represented by the corrected state space model becomes controllable. Therefore, a state feedback control system of the corrected state space model can be designed.

5. Design Example of Error Matrix Δ

The error matrix Δ is designed such that the controllable matrix $U_c{}^*$ of the corrected state space model has full rank as in the above example. A design example of such an error matrix Δ will be considered. For example, the corrected state matrix $A_p+\Delta$ is represented by the following equation (eq.31) and the input matrix $B_{p2}(x_p)$ is represented by the following equation (eq.32).

$$A_p + \Delta = \begin{bmatrix} a_{11} & a_{12} & a_{13} \\ a_{21} & a_{22} & a_{23} \\ a_{31} & a_{32} & a_{33} \end{bmatrix} \quad (eq.31),$$

$$B_{p2}(x_p) = \begin{bmatrix} 0 & 0 \\ 0 & 0 \\ b_1 & b_2 \end{bmatrix} \quad (eq.32)$$

The following equations (eq.33) and (eq.34) are established.

$$(A_p + \Delta)B_{p2}(x_p) = \begin{bmatrix} a_{13}b_1 & a_{13}b_2 \\ a_{23}b_1 & a_{23}b_2 \\ a_{33}b_1 & a_{33}b_2 \end{bmatrix} \quad (eq.33)$$

$$(A_p + \Delta)^2 B_{p2}(x_p) = \begin{bmatrix} b_1(a_{11}a_{13} + a_{12}a_{23} + a_{13}a_{33}) & b_2(a_{11}a_{13} + a_{12}a_{23} + a_{13}a_{33}) \\ b_1(a_{21}a_{13} + a_{22}a_{23} + a_{23}a_{33}) & b_2(a_{21}a_{13} + a_{22}a_{23} + a_{23}a_{33}) \\ b_1(a_{31}a_{13} + a_{32}a_{23} + a_{33}a_{33}) & b_2(a_{31}a_{13} + a_{32}a_{23} + a_{33}a_{33}) \end{bmatrix} \quad (eq.34)$$

The controllable matrix $U_c{}^*$ is represented by the following equation (eq.35).

$$U_c^* = \begin{bmatrix} 0 & 0 & a_{13}b_1 & a_{13}b_2 & b_1(a_{11}a_{13}+a_{12}a_{23}+a_{13}a_{33}) & b_2(a_{11}a_{13}+a_{12}a_{23}+a_{13}a_{33}) \\ 0 & 0 & a_{23}b_1 & a_{23}b_2 & b_1(a_{21}a_{13}+a_{22}a_{23}+a_{23}a_{33}) & b_2(a_{21}a_{13}+a_{22}a_{23}+a_{23}a_{33}) \\ b_1 & b_2 & a_{33}b_1 & a_{33}b_2 & b_1(a_{31}a_{13}+a_{32}a_{23}+a_{33}a_{33}) & b_2(a_{31}a_{13}+a_{32}a_{23}+a_{33}a_{33}) \end{bmatrix}$$

$$\text{(eq.35)}$$

In this case, when the following equality (eq.36) is established, the first row elements and the second row elements of the controllable matrix $U_c^*$ shown in the equation (eq.35) are the same. Therefore, the rank deficiency is generated, and the controllable matrix $U_c^*$ does not have full rank.

$$\frac{a_{13}}{a_{23}} = \frac{a_{11}a_{13}+a_{12}a_{23}+a_{13}a_{33}}{a_{21}a_{13}+a_{22}a_{23}+a_{23}a_{33}} \qquad \text{(eq.36)}$$

The above equation (eq.36) can be represented as in the following equation (eq.37).

$$a_{11}a_{13}a_{23} + a_{12}a_{23}^2 = a_{13}^2 a_{21} + a_{13}a_{22}a_{23} \qquad \text{(eq.37)}$$

The error matrix $\Delta$ can be designed such that the rank deficiency is not generated in the controllable matrix $U_c^*$ by determining the corrected state matrix $(A_p+\Delta)$ so that the above equation (eq.37) is not established and by subtracting the state matrix $A_p$ from the determined corrected state matrix $(A_p+\Delta)$. For example, in the corrected state matrix $(A_p+\Delta)$ represented by the above equation (eq.28), elements relating to the equation (eq.36) which influence the rank of the controllable matrix $U_c^*$ ($a_{11}$, $a_{12}$, $a_{13}$, $a_{21}$, $a_{22}$, $a_{23}$) are set as shown in the following equation (eq.38).

$$\left. \begin{array}{lll} a_{11}=0.1a_{33} & a_{12}=0 & a_{13}=-1 \\ a_{21}\ \ =0 & a_{22}=0 & a_{23}=-1 \end{array} \right\} \qquad \text{(eq.38)}$$

In the case where the elements are set as in the above equation (eq.38), a left side value of the equation (eq. 37) becomes $-0.1a_{33}$, and a right side value becomes zero. Therefore, the equation (eq.37) is not established. Thus, the rank deficiency is not generated but the controllable matrix $U_c^*$ has full rank.

The above design example is one example of designing the error matrix $\Delta$ in the case where the input matrix $B_{p2}(x_p)$ is represented as in the equation (eq.32). There is sometimes the case where the input matrix $B_{p2}(x_p)$ is represented by a form other than the above equation (eq.32). In that case, the error matrix $\Delta$ is individually designed such that the rank deficiency is not generated in the controllable matrix $U_c^*$.

6. Designing of State Feedback Control System

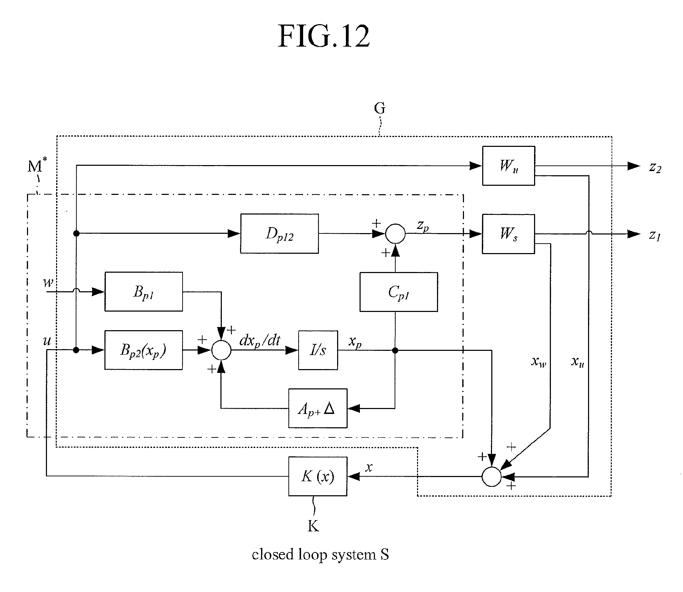

Fig. 12 is a block diagram of the closed loop system S (the state feedback control system) in which state feedback is performed in the state of the generalized plant G designed based on the system represented by the corrected state space model. A portion shown by M* of Fig. 12 is the system represented by the corrected state space model. The corrected state space model is represented by the following equation (eq.39). This equation is the same as the above equation (eq.23).

$$\begin{cases} \dot{x}_p = (A_p+\Delta)x_p + B_{p1}w + B_{p2}(x_p)u \\ z_p = C_{p1}x_p \qquad\qquad\qquad + D_{p12}u \end{cases} \qquad \text{(eq.39)}$$

As understood from Fig. 12, the frequency weight $W_s$ which is a weight varied by a frequency acts on the evaluation output $z_p$. A state space model of the frequency weight $W_s$ is expressed as in the following equation (eq.40) with using a state quantity $x_w$, an output $z_w$, and constant matrices $A_w$, $B_w$, $C_w$, $D_w$.

$$\begin{cases} \dot{x}_w = A_w x_w + B_w z_p \\ z_w = C_w x_w + D_w z_p \end{cases} \quad \text{(eq.40)}$$

*wherein* :

$$\dot{x}_w = dx_w/dt$$

The equation (eq.40) can be modified as in the following equation (eq.41).

$$\begin{cases} \dot{x}_w = A_w x_w + B_w C_{p1} x_p + B_w D_{p12} u \\ z_w = C_w x_w + D_w C_{p1} x_p + D_w D_{p12} u \end{cases} \quad \text{(eq.41)}$$

The frequency weight $W_u$ varied by the frequency acts on the control input u. A state space model of the frequency weight $W_u$ is represented as in the following equation (eq.42) with using a state quantity $x_u$, an output $z_u$, and constant matrices $A_u$, $B_u$, $C_u$, $D_u$.

$$\begin{cases} \dot{x}_u = A_u x_u + B_u u \\ z_u = C_u x_u + D_u u \end{cases} \quad \text{(eq.42)}$$

*wherein* :

$$\dot{x}_u = dx_u/dt$$

From the equations (eq.39) to (eq.42), the state space model representing the generalized plant is described as in the following equation (eq.43). This state space model includes is corrected model corrected by the error matrix $\Delta$. Therefore, the generalized plant is controllable.

$$\begin{cases} \dot{x} = Ax + B_1 w + B_2(x)u \\ z_w = C_{11}x \qquad + D_{121}u \qquad \text{(eq.43)} \\ z_u = C_{12}x \qquad + D_{122}u \end{cases}$$

*wherein* :

$$x = \begin{bmatrix} x_p \\ x_w \\ x_u \end{bmatrix}, \quad A = \begin{bmatrix} A_p + \Delta & o & o \\ B_w C_{p1} & A_w & o \\ o & o & A_u \end{bmatrix}, \quad B_1 = \begin{bmatrix} B_{p1} \\ o \\ o \end{bmatrix}, \quad B_2(x) = \begin{bmatrix} B_{p2}(x_p) \\ B_w D_{p12} \\ B_u \end{bmatrix}$$

$$C_{11} = \begin{bmatrix} D_w C_{p1} & C_w & o \end{bmatrix}, \quad D_{121} = \begin{bmatrix} D_w D_{p12} \end{bmatrix}, \quad C_{12} = \begin{bmatrix} o & o & C_u \end{bmatrix}, \quad D_{122} = D_u$$

7. Designing of State Feedback Controller

The state space model represented as in the above equation (eq.43) is the bilinear system. Therefore, when a positive definite symmetric matrix P satisfying the Riccati inequality shown in the following equation (eq.44) exists in relation to the preliminarily set positive constant γ, the closed loop system S of Fig. 12 is internally stabilized and the $L_2$ gain $\|S\|_{L2}$ of the closed loop system S representing robustness against the disturbance can be made less than γ.

$$PA + A^T P + \frac{1}{\gamma^2} P B_1 B_1^T P + C_{11}^T C_{11} + C_{12}^T C_{12} < 0 \qquad (eq.44)$$

At this time, one of the state feedback controller K (=K(x)) is represented as shown in the following equation (eq.45).

$$K(x) = u = -D_{122}^{-1}(D_{122}^{-T} B_2^T(x)P + C_{12})x \quad (eq.45)$$

The equation (eq.45) is described as in an equation (eq.47) under a condition represented by an equation (eq. 46).

$$C_{12} = o, \qquad D_{122} = I \quad (eq.46)$$

$$K(x) = u = -B_2^T(x)Px \quad (eq.47)$$

The control input u is calculated by the state feedback controller K (=K(x)) designed as in the above equation (eq.47) as one example, that is, the state feedback controller K (=K(x)) designed such that the $L_2$ gain of the closed loop system S becomes less than the positive constant γ. By the calculated control input u, the right side variable damping coefficient $C_{vR}$ and the left side variable damping coefficient $C_{vL}$ are obtained. In the present embodiment, the damping force characteristic of the right side damper 20R and the damping force characteristic of the left side damper 20L are controlled on the basis of the right side variable damping coefficient $C_{vR}$ and the left side variable damping coefficient $C_{vL}$ obtained as described above. By controlling the damping force as described in the present embodiment, the vibrations of the right suspension apparatus $SP_R$ and the left suspension apparatus $SP_L$ are controlled.
According to the above present embodiment, the micro computer 50 as the state feedback control apparatus is provided with the state feedback controller K (the nonlinear H-infinity controller 51) for calculating the control input of the system based on the state quantity of the system represented by the corrected state space model, and the control means (the requested damping force calculation section 52, the requested step number determination section 53) for controlling the vibrations of the suspension apparatuses $SP_R$, $SP_L$ by controlling the damping forces of the suspension apparatuses $SP_R$, $SP_L$ (the dampers 20R, 20L) based on the control input calculated by the state feedback controller K.
The above corrected state space model is obtained by correcting the state space model by adding the error matrix Δ to the state matrix of the state space model of the suspension apparatuses $SP_R$, $SP_L$ represented as the uncontrollable system. The error matrix Δ is designed such that the controllable matrix of the corrected state space model has full rank by adding the error matrix Δ to the state matrix. Therefore, the system represented by the corrected state space model (or the generalized plant) becomes controllable, and the control object can be state-feedback controlled.
A basic structure of the corrected state space model is the same as the original state space model of the control object except that the error matrix Δ is only added. Therefore, there is no need for redesigning time of the model. Further, since the error matrix Δ is added to the state matrix which is less influential on the output of the model, the error matrix

$\Delta$ does not greatly influence the output. In addition, since only one error matrix $\Delta$ is added into the corrected state space model, buildup of the error is not generated. Therefore, deviation between the corrected state space model and the state space model of the actual control object is small, to thereby highly precisely state-feedback control is achieved. Since an error examination point is one point, time required for examining the error can be shortened. That is, according to the present embodiment, the control object can be highly precisely state-feedback controlled by a simple model correction.

The error matrix $\Delta$ is set such that the elements of the state matrix influencing the rank of the controllable matrix $U_c{}^*$ of the corrected state space model are changed. Therefore, the error is added to the elements serving as a cause of the rank deficiency. By such an element correction, the corrected state space model can be made controllable.

The nonlinear H-infinity controller 51 calculates the control input by applying the nonlinear H-infinity state feedback control to the generalized plant G designed based on the system represented by the corrected state space model. Thereby, the suspension apparatuses $SP_R$, $SP_L$ can be state-feedback controlled such that disturbance suppression and robust stabilization are improved.

As understood from the equation (eq.27), the magnitude of the non-zero element of the error matrix $\Delta$ is 1/10 of the magnitude of the non-zero element of the state matrix $A_p$. Therefore, the system represented by the corrected state space model can sufficiently obtain the controllability, and an influence rate of the error on the system is sufficiently reduced. In addition, the non-zero element of the error matrix $\Delta$ and the non-zero element of the state matrix are different from each other in terms of the number of digits. Thus, when the error is added to the state matrix $A_p$, an addition element is prevented from being zero due to the setoff. This addition element is used for an element calculation of the controllable matrix $U_c{}^*$. Thus, since the addition element is not zero, the rank deficiency is not easily generated in the controllable matrix $U_c{}^*$.

Further, according to the present embodiment, the elements in the error matrix $\Delta$ not influencing the rank of the controllable matrix $U_c{}^*$ of the corrected state space model are set to zero. By setting the elements not relating to the rank deficiency of the controllable matrix $U_c{}^*$ to zero in such a way, the influence of the error matrix $\Delta$ on the system can be reduced, and the deviation between the corrected state space model and the original state space model of the control object can be more decreased.

In the present embodiment, the control object is consisted of the vibration system including the sprung member of the vehicle, the unsprung members, and the suspension apparatuses $SP_R$, $SP_L$ having the dampers and the springs interposed between the sprung member and the unsprung members. The above vibration system is controlled by controlling the damping forces of the suspension apparatuses $SP_R$, $SP_L$ by the micro computer 50. Thereby, the riding quality of the vehicle is improved.

From the above embodiment, the following inventions can be proposed.

(1) A corrected state space model formed so as to represent a controllable system by adding an error matrix $\Delta$ to a state matrix of a state space model of a control object representing an uncontrollable system.

(2) A designing method of a state feedback controller for calculating a control input based on a state quantity of the system represented by a state space model, wherein the state feedback controller is designed by applying H-infinity control to a generalized plant designed based on a system represented by a corrected state space model formed so as to represent a controllable system by adding an error matrix $\Delta$ to a state matrix of a state space model of a control object representing an uncontrollable system.

(3) In the invention (1) or (2), a magnitude of a non-zero element of the error matrix $\Delta$ is 1/10 to 1/100 of a magnitude of a non-zero element of the state matrix.

The present invention is not limited to the above embodiment. For example, the two wheel model of the vehicle is taken as an example in the above embodiment, and the state feedback control apparatus capable of obtaining two control inputs from one motion equation is disclosed. The present invention can be applied to control other than such state feedback control. For example, with using three motion equations relating to heave motion, pitch motion, and roll motion of an sprung member of the vehicle derived from a four wheel model of a vehicle, a corrected state space model can be formed so as to represent a controllable system by correcting a state space model representing an uncontrollable system. In this case, control inputs are set to variable damping coefficients of dampers respectively provided in four suspension apparatuses attached to front left and right portions and rear left and right portions of the sprung member. An error matrix $\Delta$ is added to a state matrix of the uncontrollable state space model which represents the four wheel model to design the corrected state space model which is controllable. Four control inputs are calculated from a state feedback controller obtained by applying the H-infinity control or the like to a generalized plant designed based on a system represented by the corrected state space model, and damping forces of the four suspension apparatuses can also be controlled based on the calculated inputs. In this case, the three motion equations serving as bases in designing of the state space model are for example represented by the following equation (eq.48), and a control input u is represented by the following equation (eq.49).

$$\begin{cases} Heave: M\ddot{x} = F_{f_r} + F_{f_l} + F_{rr} + F_{rl} \\ Roll: I_r\ddot{\theta}_r = \frac{1}{2}T_f(F_{fr} - F_{fl}) + \frac{1}{2}T_r(F_{rr} - F_{rl}) \qquad (eq.48) \\ Pitch: I_p\ddot{\theta}_p = \frac{1}{2}L(F_{fr} + F_{fl} - F_{rr} - F_{rl}) \end{cases}$$

wherein:

M: a mass of the sprung member;
x: a vertical displacement of the sprung member;
$F_{fr}$: a vertical force acting on the right front side of the sprung member;
$F_{fl}$: a vertical force acting on the left front side of the sprung member;
$F_{rr}$: a vertical force acting on the right rear side of the sprung member;
$F_{rl}$ a vertical force acting on the left rear side of the sprung member;
$I_r$: roll inertia moment;
$I_p$: pitch inertia moment;
L: a wheelbase;
$\theta_r$: a roll angle;
$\theta_p$: a pitch angle;
$T_f$: a tread (front side); and
$T_r$: a tread (rear side).

$$u = \begin{bmatrix} C_{vfr} \\ C_{vfl} \\ C_{vrr} \\ C_{vrl} \end{bmatrix} \qquad (eq.49)$$

wherein:

$C_{vfr}$: a variable damping coefficient of a right side front damper;
$C_{vfl}$: a variable damping coefficient of a left side front damper;
$C_{vrr}$: a variable damping coefficient of a right side rear damper; and
$C_{vrl}$: a variable damping coefficient of a left side rear damper.

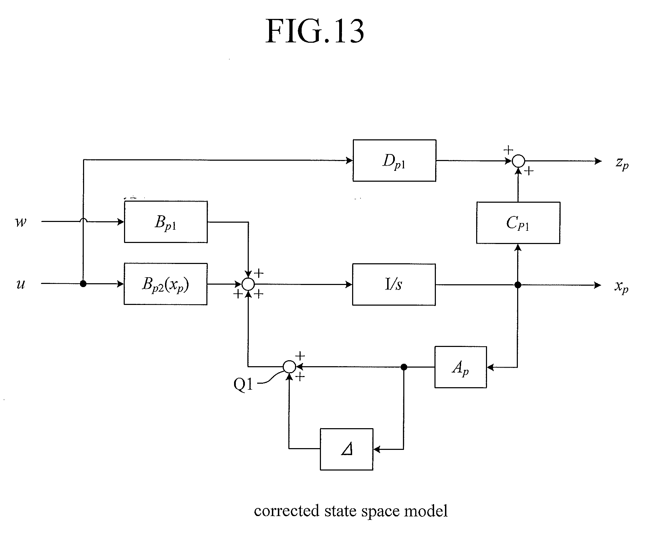

In the above embodiment, the error matrix $\Delta$ is added to the state matrix $A_p$ as the additive error as shown in Fig. 11. However, the error matrix $\Delta$ may be added to the state matrix $A_p$ as a multiplicative error as shown in Fig. 13. In this case, the corrected state matrix is represented as in the following equation (eq.50).

$$CSM = A_p + A_p\Delta \qquad (eq.50)$$

wherein: CSM denotes the corrected state matrix.
In this case, the error matrix is represented by $A_p\Delta$.
Although the present invention is described taking the damping force control of the suspension apparatuses of the vehicle as an example in the above embodiment, the present invention can be applied to other state feedback control. Although the present invention is described taking the nonlinear H-infinity state feedback control as an example in the present embodiment, the present invention may be applied to linear H-infinity state feedback control. Further, the present invention is applied to the control which is not H-infinity control. The present invention can be modified as long as the invention does not depart from the scope of the invention.

## EP 2 400 357 A1

**Claims**

1. A state feedback control apparatus for state-feedback controlling a control object, comprising:

   a state feedback controller for calculating a control input of a system based on a state quantity of the system represented by a corrected state space model, the corrected state space model being formed so as to represent a controllable system by adding an error matrix $\Delta$ to a state matrix of a state space model of the control object representing an uncontrollable system; and

   control means for controlling the control object based on the control input calculated by the state feedback controller.

2. The state feedback control apparatus according to claim 1, wherein
   the state feedback controller calculates the control input by applying H-infinity state feedback control to a generalized plant designed based on the system represented by the corrected state space model.

3. The state feedback control apparatus according to any of claim 1 and 2, wherein
   a magnitude of a non-zero element in the error matrix $\Delta$ is 1/10 to 1/100 of a magnitude of a non-zero element in the state matrix.

4. The state feedback control apparatus according to any of claims 1 to 3, wherein
   An element which does not influence a calculation of a rank of a controllable matrix of the corrected state space model in the error matrix $\Delta$ is set to zero.

5. The state feedback control apparatus according to any of claims 1 to 4, wherein
   the control object includes a suspension apparatus provided with a damper and a spring interposed between a sprung member and an unsprung member of a vehicle, and
   the control means controls a damping force for damping a vibration of the suspension apparatus.

6. A state feedback controller for calculating a control input of a system based on a state quantity of the system represented by a state space model, wherein
   the state feedback controller calculates the control input based on a state quantity of the system represented by a corrected state space model which is formed so as to represent a controllable system by adding an error matrix $\Delta$ to a state matrix of a state space model representing an uncontrollable system.

7. The state feedback controller according to claim 6, wherein
   the state feedback controller calculates the control input by applying H-infinity state feedback control to a generalized plant designed based on the system represented by the corrected state space model.

8. The state feedback controller according to any of claim 6 and 7, wherein
   a magnitude of a non-zero element in the error matrix $\Delta$ is 1/10 to 1/100 of a magnitude of a non-zero element in the state matrix.

9. The state feedback controller according to any of claims 6 to 8, wherein
   An element which does not influence a calculation of a rank of a controllable matrix of the corrected state space model in the error matrix $\Delta$ is set to zero.

10. A state feedback control method for state-feedback controlling a control object, comprising:

    a control input calculating step for calculating a control input of a system based on a state quantity of the system represented by a corrected state space model, the corrected state space model being formed so as to represent a controllable system by adding an error matrix $\Delta$ to a state matrix of a state space model of the control object representing an uncontrollable system; and

    a control step for controlling the control object based on the control input calculated in the control input calculating step.

11. The state feedback control method according to claim 10, wherein
    the control input is calculated by applying H-infinity state feedback control to a generalized plant designed based on the system represented by the corrected state space model in the control input calculating step.

# FIG.1

state space model

# FIG.2

corrected state space model

# FIG.3

# FIG.4

# FIG.5

Variable damping coefficient calculation processing —S100

Input $dy^2/dt^2$, $dr_R^2/dt^2$, $dr_L^2/dt^2$, $r_R\text{-}y$, $r_L\text{-}y$ —S102

Calculate $dy/dt$, $dr_R/dt$, $dr_L/dt$, $dr_R/dt\text{-}dy/dt$, $dr_L/dt\text{-}dy/dt$ —S104

Calculate $C_{vR}$, $C_{vL}$ based on nonlinear H-infinity control theory —S106

Output $C_{vR}$, $C_{vL}$ —S108

End —S110

# FIG.6

$$\text{Requested damping force calculation processing} \quad \text{S200}$$

$$\boxed{\text{Input } C_{vR}, \ C_{vL}} \quad \text{S202}$$

$$\boxed{\begin{array}{c} \text{Calculate requested damping coefficients } C_{reqR}, \ C_{reqL} \\ C_{reqR} = C_{vR} + C_{sR} \\ C_{reqL} = C_{vL} + C_{sL} \end{array}} \quad \text{S204}$$

$$\boxed{\begin{array}{c} \text{Calculate requested damping forces } F_{reqR}, \ F_{reqL} \\ F_{reqR} = C_{reqR} \cdot (dr_R/dt - dy/dt) \\ F_{reqL} = C_{reqL} \cdot (dr_L/dt - dy/dt) \end{array}} \quad \text{S206}$$

$$\boxed{\text{Output } F_{reqR}, \ F_{reqL}} \quad \text{S208}$$

$$\text{End} \quad \text{S210}$$

# FIG.7

```
┌─────────────────────────┐
│  Requested step number  │ ─ S300
│ determination processing │
└─────────────────────────┘
            │
┌─────────────────────────┐
│   Input $F_{reqR}$, $F_{reqL}$   │ ─ S302
└─────────────────────────┘
            │
┌─────────────────────────┐
│   Refer to damping force │
│  characteristic tables and │ ─ S304
│  determine $D_{reqR}$, $D_{reqL}$ │
└─────────────────────────┘
            │
┌─────────────────────────┐
│   Output $D_{reqR}$, $D_{req}$    │ ─ S306
└─────────────────────────┘
            │
            ▼
┌─────────────────────────┐
│           End           │ ─ S308
└─────────────────────────┘
```

# FIG.8

closed loop system S

# FIG.9

# FIG.10

state space model

# FIG.11

corrected state space model

# FIG.12

closed loop system S

# FIG.13

corrected state space model

| **INTERNATIONAL SEARCH REPORT** | International application No. |
|---|---|
| | PCT/JP2009/053306 |

A.   CLASSIFICATION OF SUBJECT MATTER
*G05B11/36(2006.01)i, G05D19/02(2006.01)i*

According to International Patent Classification (IPC) or to both national classification and IPC

B.   FIELDS SEARCHED

Minimum documentation searched (classification system followed by classification symbols)
G05B11/36, G05D19/02

Documentation searched other than minimum documentation to the extent that such documents are included in the fields searched

| Jitsuyo Shinan Koho | 1922-1996 | Jitsuyo Shinan Toroku Koho | 1996-2009 |
|---|---|---|---|
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2000-148208 A  (Toyota Motor Corp.),<br>26 May, 2000 (26.05.00),<br>Full text; all drawings<br>& US 6314353 B1          & DE 19943112 A<br>& FR 2784941 A          & FR 2784941 A1 | 1-11 |

☐   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 March, 2009 (12.03.09) | 24 March, 2009 (24.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/053306

The description in claim 1 is lack of the support in the meaning of PCT Article 6 and the description does not disclose the invention in claim 1 in the meaning of PCT Article 5 because of the following reasons:

(1) From the description in claim 1 of "a system represented by a corrected state space model in which an error matrix ($\Delta$) is added to a state matrix of a state space model of the control subject to represent an uncontrollable system, so that the uncontrollable system is corrected to represent a controllable system", it is deemed that every "uncontrollable system" including a system and the like that become uncontrollable because all the elements of an input matrix (a matrix (B) in the equation (eq. 1) of the description) of a state space model of a control subject, for example, are zero is corrected to represent a controllable system by adding an error matrix ($\Delta$) to a state matrix of a state space model of the control subject.

On the other hand, as a case in which a system becomes uncontrollable, it is only supposed in the description that "the number of motion equations which are bases of the design of a state space model of a control subject is less than the number of control inputs calculated by a state feedback controller". Thus, the case in which a system that become uncontrollable because all the elements of an input matrix of a state space model of a control subject are zero as set forth above is not supposed, and there is no disclosure as to how the correction is carried out to represent a controllable system by adding an error matrix ($\Delta$) to a state matrix of a state space model of the control subject that represents the uncontrollable system (it is self-explanatory that, in regard of a system that becomes uncontrollable because all the elements of an input matrix of a state space model of a control subject are zero, even if an error matrix ($\Delta$) is added to a state matrix of the state space model, the rank of a controllable matrix (Uc) does not become a full rank, so that the system does not become controllable.

(2) From the description in claim 1 of "an uncontrollable system is represented ... a state feedback controller that calculates a system control input in accordance with a state amount of a system represented by a corrected state space model, a control means that controls the control subject in accordance with the control input calculated by the state feedback controller", it is deemed that the control subject is controlled by all the state feedback controls except $H_\infty$ state feedback control.

On the other hand, an $H_\infty$ state feedback controller is designed only by equations (eq. 44) and (eq. 45) based on the explanation of "1-3. A solution of a non-linear $H_\infty$ state feedback control" in the description, it is not deemed that the control subject is controlled by any other state feedback controls except the $H_\infty$ state feedback control (a technical feature to add an error matrix ($\Delta$) to a state matrix of a state space model of the control subject is deemed from explanations at page 24 in the description to means that so called perturbation is added to the inside of a state matrix in the $H_\infty$ state feedback control theory. Since verification (or the like) for safety of a control system is not disclosed, however, in the control of a control subject by any other state feedback controls except the $H_\infty$ state feedback control, it is impossible to specify how the technical feature to add the error matrix ($\Delta$) to a state matrix of a state space model of the control subject technically means).

Thus, the search has been conducted for an $H_\infty$ "state feedback control device" in respect of claim 1. (continued to next extra sheet)

Form PCT/ISA/210 (extra sheet) (April 2007)

When the number of motion equations on the basis of the design of a state space model of a control subject is less than the number of control inputs calculated by an $H_\infty$ state feedback controller, the "feedback control device" for carrying out an $H_\infty$ "state feedback control" of "the control subject" is characterized in comprising an $H_\infty$ "state feedback controller" for calculating a system control input in accordance with a system state amount represented by a corrected state space model corrected to represent a controllable system by adding an error matrix ($\Delta$) to a state matrix of a state space model of the control subject representing an uncontrollable system and a control means to control the control subject in accordance with the control input calculated by "the" $H_\infty$ "state feedback controller".

Similarly, the search has been conducted for an $H_\infty$ "state feedback controller" in respect of claim 6. When the number of motion equations on the basis of the design of a state space model of a control subject representing a system is less than the number of control inputs calculated by an $H_\infty$ state feedback controller, the $H_\infty$ "state feedback controller" "calculates the system control input in accordance with the system state amount expressed by the state space model", wherein the $H_\infty$ "state feedback controller" is characterized in calculating the system control input in accordance with the system state amount expressed by a corrected state space model corrected to express a controllable system by adding an error matrix ($\Delta$) to a state matrix of a state space model representing an uncontrollable system of the control subject".

Further, the search has been conducted for an $H_\infty$ "state feedback control method" in respect of claim 10. When the number of motion equations on the basis of the design of a state space model of a control subject is less than the number of control inputs calculated by an $H_\infty$ state feedback controller, the $H_\infty$ "state feedback control method" carries out an $H_\infty$ "state feedback control" of the "control subject", wherein the $H_\infty$ "state feedback control method" is characterized in including a control input calculation step for calculating a system control input in accordance with the system state amount expressed by a corrected state space model corrected to express a controllable system by adding an error matrix ($\Delta$) to a state matrix of a state space model of the control subject representing an uncontrollable system and a control step for controlling the control subject in accordance with the control input calculated by a control input calculation step".

In addition, the search has been conducted for the inventions in claims 2-5, 7-9 and 11 on the assumption that claims 1, 6 and 10 are deemed to be the inventions as set forth above.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000148208 A